# EUROPEAN PATENT APPLICATION

(11) **EP 4 383 178 A1**
(43) Date of publication of application: **12.06.2024**
(21) Application number: 22315321.4
(22) Date of filing: 08.12.2022
(51) Int. Cl.: G06Q 30/0251, G06Q 30/0283, G06F 16/958

(54) **SYSTEM AND METHOD FOR NORMALIZATION OF ELECTRONIC MESSAGE CONTENT REPRESENTING PRICING ACROSS DIFFERENT PLATFORMS**

(71) Applicant: Amadeus S.A.S., 06410 Biot (FR)
(72) Inventor: BOUDIA, Mourad, 06560 Valbonne (FR); HAUVILLER, Nicolas, 06560 Valbonne (FR); TEXIER, Rodolphe, 06220 Vallauris (FR); BEN ROMDHANNE, Bilel, 06650 Oplo (FR); DONMEZ, Fatih, 10245 Berlin (DE)
(74) Representative: Warren, Caroline Elisabeth

(57) **Abstract**

The present specification provides a multiplatform virtual retail store engine. The specification can have application to client devices with augmented or virtual reality hardware that interact with different platforms with metaverse capabilities. Rich experiences are provided on client hardware while making efficient use of available processing, memory and communication resources. Embodiments discuss the provision of a single retail store model which is dynamically adapted for generation across the plurality of different platforms according to the different metaverse capabilities. Embodiments also discuss include ranking of the same user across different accounts on different metaverse platforms. Embodiments discuss the normalization of formatting and content electronic messages representing currencies and other instruments of exchange across different platforms.

## Description

### BACKGROUND

Internet browsing began with the original hypertext markup language (HTML). HTML has iterated to its fifth version and continues to evolve. Elegant web browsing experiences are now commonplace, even on wireless mobile phones with small screens. With the correct equipment, augmented reality and virtual reality environments (commonly referred to as the metaverse), are on the cusp of providing even richer experiences than offered by traditional browsing. Standard Internet speeds now offer commonplace real time communication amongst large groups of people. At the same time, Internet content is increasing in volume and changing rapidly. Enormous unresolved challenges are present in efficiently utilizing computing, processing and communication resources.

### SUMMARY

An aspect of the present specification provides a system, apparatus and method for normalization of electronic message content representing pricing across different virtual platforms. The apparatus comprises an adaptation engine comprising:
receiving a pricing request from a virtual platform for electronic content generated on the platform to a client device; the content representing a good or service;
receiving capabilities of the platform including service fees for handling a electronic transaction representing a sale of the content;
receiving account information for a user operating the client device within an authenticated session between the client device and the platform;
receiving exchange rates based on a first set of currencies associated with the platform capabilities and a second set of currencies associated with the account information;
determining a first amount representing a final pricing in a selected one of the currencies; the final pricing based on a second amount representing a margin and a third amount representing expenses for at least one of the content, the service fees, and the exchange rates; and,
controlling the platform to generate a response based on the first amount.

The first set of currencies and the second set of currencies include one or more of national currencies, cryptocurrencies, in-game currencies, and virtual currencies.

The content can be hosted on one of a plurality of content engines respective to different retailers.

The margin can be based on a pricing policy that can emphasize one or more of pricing control or inventory control.

The response can be sent from the platform to the client device.

The processor is further configured to control a second platform to generate the response based on the first amount when the user accesses the second platform. during a second authenticated session with the second platform.

The account information can be derived from a unified account that aggregates accounts for the same user for a plurality of platforms.

The final pricing can be expressed in the selected currency from the second set of currencies and not available in the first set of currencies, and wherein adaptation engine is configured to normalize the messaging between the client device and the platform in the selected currency.

The processor can be further configured to augment a checkout function on the platform based on the selected currency.

An aspect of the present specification provides a matching engine comprising:
a network interface; and
a processor configured to:
   compare first metaverse metadata associated with a first account of a first metaverse and second metaverse metadata associated with a second account of a second metaverse;
   the first metaverse metadata comprising at least one of: first user data; first connection times that a first metaverse human-machine interface (HMI) associated with the first user connected to the first metaverse; first disconnection times that a first metaverse HMI associated with the first user disconnected from the first metaverse and time duration of activity by the first user with respect to the first metaverse;
   the second metaverse metadata comprising at least one of: second user data; second connection times that a second metaverse HMI associated with the second user was connected to the second metaverse; and
   in response to determining, from the first metaverse metadata and the second metaverse metadata, that the first user and the second user is a same user:
      when the first metaverse HMI is connected to the first metaverse, adapt, via the network interface, first behavior of the first metaverse based on the second metaverse metadata to control first physical feedback of the first metaverse HMI to indicate the first behavior; and
      when the first metaverse HMI is connected to the second metaverse, adapt, via the network interface, second behavior of the second metaverse based on the first metaverse metadata, to control second physical feedback of the second metaverse HMI to indicate the second behavior.

The processor can be further configured to receive, via the network interface, the first metaverse metadata and the second metaverse metadata.

The network interface can be configured to:
receive the first metaverse metadata from first sensors associated with the first metaverse; and,
receive the second metaverse metadata from second sensors associated with the second metaverse.

The first user data and the second user data can comprise one or more of:
non-fungible token (NFT) information identifying respective NFTs associated with one or more of the first metaverse and the second metaverse;
avatar information identifying respective avatars associated with one or more of the first metaverse and the second metaverse; and
behavior information identifying respective avatar behavior associated with one or more of the first metaverse and the second metaverse.

The processor can be further configured to determine, from the first metaverse metadata and the second metaverse metadata, that the first user and the second user is the same user by:
determining that the first user data and the second user data include given commonalities therebetween; and
determining that the first connection times and the second connection times are different from one another.

The processor can be further configured to determine, from the first metaverse metadata and the second metaverse metadata, that the first user and the second user is the same user by:
determining that a probability that the first user data and the second user data are associated;
determining that the probability meets a threshold condition; and
determining that the first connection times and the second connection times are different from one another.

The processor can be further configured to:
determine that the first connection times and the second connection times at least partially overlap; and, in response,
electronically initiate a corrective action.

The processor can be further configured to: in response to determining that the first user and the second user is a same user, one or more of:
transmit one or more messages to a communication device associated with the same user;
store the first user data in association with the second metaverse;
store the second user data in association with the first metaverse; and
update information associated with the same user based on one or more of the first user data and the second user data.

The processor can be further configured to:
in response to determining that the same user is logged into the first metaverse using first metaverse credentials and teleports to the second metaverse using second metaverse credentials, provide the first user data to the second metaverse; and
in response to determining that the same user is logged into the second metaverse using the second metaverse credentials and teleports to the first metaverse using the first metaverse credentials, provide the second user data to the first metaverse.

Another aspect of the present specification provides a method for cross platform account unification comprising:
receiving an identifier for each of a plurality of platforms; at least one of the platforms configured to generate an interactive metaverse;
receiving metadata for at least one user account for each of the platforms;
comparing the metadata for each of the accounts;
determining that at least two of the accounts match with a single user;
associating the at least two of the accounts with a unified account; and,
controlling at least one of the platforms based on the unified account.

The metadata can be inferred from behavioural information from the pattern of usage of input devices by the user at a client device used to control an avatar in the interactive metaverse.

The metadata can be derived from non-fungible token (NFT) information identifying respective NFTs associated with the at least one user account.

The metadata can be derived from declarative data identifying the user.

The metadata can be derived from alternating connection times of each platform.

The match can be based on a probability threshold. The probability threshold can be derived from a machine learning algorithm that receives positive confirmation from a plurality of the single users of a correct match and then applies the probability threshold to additional single users without positive confirmation. If the probability threshold is less than one hundred percent the controlling is limited to generating interactive metaverse advertisements.

The controlling can comprise generating an interactive metaverse advertisement on one of the platforms directed the single user based on actions performed by the single user an another one of the platforms.

The controlling can comprise providing travel services including a single travel sales transaction of one or more of marketing, sales, travel option selections across two of the platforms.

The controlling can comprise automatically providing authentication credentials to one of the platforms when the single user switches from another one of the platforms.

Another aspect of the present specification provides an adaptation engine comprising:
a network interface configured to communicate with a platform server configured to provide a metaverse space; and
a processor configured to:
   access a memory storing a metaverse model to be provided in the metaverse space;
   access criteria for providing metaverse objects in the metaverse space;
   determine incompatibilities between objects of the model and the criteria;
   for a given object of the model associated with an incompatibility:
   implement one or more substitutions to replace the given object with a corresponding object adapted according to the criteria;
   update, at the memory, the model to replace the given object with the corresponding object; and
   provide the updated model to the metaverse server to cause the metaverse server to generate the metaverse model in the metaverse space according to the updated model such that the metaverse server is configured to control output at a metaverse human-machine interface (HMI) to according to the corresponding object.

Another aspect of the specification provides a method to communicate with a platform server configured to provide a metaverse space comprising:
accessing a memory storing a metaverse model to be provided in the metaverse space;
accessing criteria for providing metaverse objects in the metaverse space; determining incompatibilities between objects of the model and the criteria;
for a given object of the model associated with an incompatibility:
   implement one or more substitutions to replace the given object with a corresponding object adapted according to the criteria;
   update, at the memory, the model to replace the given object with the corresponding object; and
   providing the updated model to the metaverse server to cause the metaverse server to generate the metaverse model in the metaverse space according to the updated model such that the metaverse server is configured to control output at a metaverse human-machine interface (HMI) to according to the corresponding object.

Another aspect-of the present specification provides an adaptation engine comprising a network interface configured to communicate with a platform server. The platform server is configured to provide a session with a client device. The adaptation engine includes a processor having access to a memory for storing content for rendering over the session. The processor is configured to: receive a request for content to be delivered to the client device from the platform server; determine a platform server computing resource capability; determine a client device computing resource capability; define a session computing resource capability for the session based on the platform server computing resource capability and the client device computing resource capability; access, from the memory, essential content respective to the request; access, from the memory, additional content augmenting the essential content, based on the session computing resource capability; and, generate a response to the request based on the essential content and the additional content.

Another aspect of the specification provides a device comprising: a network interface configured to communicate with a metaverse server configured to provide a given metaverse space; and a processor having access to a memory storing metaverse items for rendering in one or more metaverse spaces, the processor configured to:
determine metaverse capability data for the given metaverse space;
determine human-machine interface (HMI) data defining capability of a metaverse HMI for a given user and limits placed on the metaverse HMI to account for accessibility of the given user;
determine that the given metaverse space is being accessed by the given user using the metaverse HMI;
one or more of filter and adapt one or more of the metaverse items based on the metaverse capability data and the HMI data; and
provide the metaverse items, as filtered or adapted, to the metaverse server to cause the metaverse server to provide the metaverse items in the given metaverse space to cause physical feedback to the metaverse HMI to indicate the metaverse items, as filtered or adapted.

Methods, systems and devices and apparatus according to any combination or variant of the foregoing are contemplated. In particular, apparatus comprising means to implement each of the steps set out in the methods described above or in the accompanying claims are contemplated. Moreover, also contemplated is a computer program, computer program product or computer readable medium comprising instructions which, when executed by a computer, cause the computer to carry out the steps of any of the methods set out above or in any of the accompanying method claims.

### BRIEF DESCRIPTION OF THE FIGURES

Figure 1 is a schematic diagram of a system for multi-platform content normalization.
Figure 2 is a block diagram of example internal components of any server in Figure 1.
Figure 3 shows the block diagram of Figure 2 as applied to the adaptation server of Figure 1.
Figure 4 shows a flowchart depicting a method for multi-platform content normalization.
Figure 5 shows the system of Figure 1 during a session between a given client device and a given platform.
Figure 6 shows an example rendering of a metaverse environment during the example session of Figure 5.
Figure 7 shows an example of a detailed and rich rendering of an airline seat that can be selected during the example session of Figure 6.
Figure 8 shows an example of a non-rich rendering of an airline seat selection map that can be selected during a session between a client device and a given platform having fewer capabilities than the session represented in Figure 5.
Figure 9 is a schematic diagram of a system for multi-platform content normalization of a virtual retail store.
Figure 10 shows a flowchart depicting a method for multi-platform content normalization of a virtual retail store.
Figure 11 shows an example model of the exterior or a virtual retail store.
Figure 12 shows an example model of an interior view of a virtual retail store.
Figure 13 shows an example model of another interior view of a virtual retail store.
Figure 14 shows an example model of another interior view of a virtual retail store.
Figure 15 shows a criteria chart of capabilities of various platforms of Figure 9.
Figure 16 shows an example of creation of a single virtual retail store model as adapted and rendered on different platforms.
Figure 17 shows another example of creation of a single virtual retail store model as adapted and rendered on different platforms.
Figure 18 is a schematic diagram of a system for cross platform account unification.
Figure 19 shows a flowchart depicting cross platform account unification.
Figure 20 shows an example of account metadata for two of the platform accounts for a single user.
Figure 21 shows an example of the comparing function from the method of Figure 19.
Figure 22 shows another example of the comparing function from the method of Figure 19.
Figure 23 shows another example of the comparing function from the method of Figure 19.
Figure 24 shows another example of the comparing function from the method of Figure 19 based on probabilistic determinations.
Figure 25 shows a schematic diagram of a system for normalization of electronic message content representing pricing across different platforms.
Figure 26 shows a flowchart for normalization of electronic message content representing pricing across different platforms.
Figure 27 shows a variant on the system of Figure 25.

### DETAILED DESCRIPTION

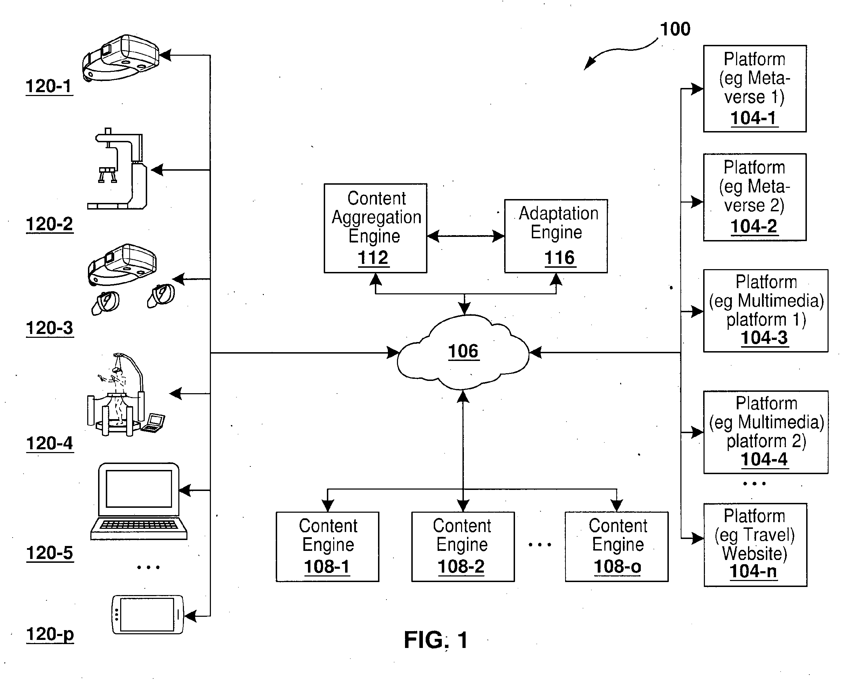

Figure 1 shows a system for multi-platform content normalization indicated generally at 100. System 100 comprises a plurality of interaction platforms 104 104-1, 104-2 ... 104-n. (Collectively, platforms 104-1, 104-2 ... 104-n are referred to as platforms 104, and generically, as platform 104. This nomenclature is used elsewhere herein.) Platforms 104 can be based on any present or future interactive communication platforms such as a simple messaging service (SMS) interactive service, a browser-based e-commerce travel booking environment such as Travelocity^{™}, Expedia^{™} or any of the individual airline or hotel booking engines. Interactive communication platforms also include social media environments like Facebook^{™}, Tiktok^{™}, or even communication channel such as Whatsapp^{™}, or a massively multi-player environment such as Second Life^{™}, MineCraft^{™}, Fortnite^{™}, or a virtual reality 3D metaverse environment such as Roblox^{™} or Horizon Worlds^{™}. Certain non-limiting examples for each platform 104 are labelled in Figure 1 for purpose of discussion. Namely, platform 104-1 is labelled with the example "Metaverse 1" (such as Roblox^{™} or Horizon Worlds^{™}); platform 104-2 is labelled with the example "Metaverse 2"; platform 104-3 is labelled with the example "Multimedia Platform 1" (such as Second Life^{™}); platform 104-4 is labelled with the "Multimedia Platform 2" (such as Expedia^{™}); platform 104-n is labelled with the "Travel Website"; These examples are nonlimiting and purely illustrative. Other platforms and combinations thereof are contemplated.

In system 100, platforms 104 connect to a network 106. Any network topology is contemplated, such as, by way of non-limiting example, the Internet, one or more intranets, or combinations thereof. Network 106 interconnects platforms 104, with: a) at least one content engine 108; b) at least one content aggregation engine 112 that is coupled with a platform adaptation engine 116; and, c) a plurality of client devices 120. (in a variant, a single content engine 108 would obviate the need for content aggregation engine 112).

As will be explained in greater detail below, each content engine 108 can be based upon its own computing architecture and will periodically send content to aggregation engine 112 for access by one or more client devices 120 via one or more platforms 104. Content engines 108 can be based on any type of known or future Internet content. In a present illustrative, but non-limiting embodiment, content engines 108 are operated by travel actors within the travel industry, including, but not limited to, airlines, railway systems, car rental agencies, cruise line operators, hotels, restaurants, resorts, and spas.

Thusly, content aggregation engine 112 periodically receives data files including content that has been sent by content engines 108 via network 106. In the present example embodiment, content aggregation engine 112 can be operated by, or accessed by, for example, a travel booking engine. To elaborate, a travel booking engine that could operate content aggregation engine 112 could include well-known travel booking engines such as Expedia^{™}, Travelocity^{™} or Hotels.com^{™}. There are many other travel booking engines. Content aggregation engine 112 can thus be operated directly by such a travel booking engine, or can be hosted by a travel data aggregator, often referred to as a Global Distribution System ("GDS"), such as Amadeus^{™}, Sabre^{™} , Travelport^{™}, Apollo^{™,} Galileo^{™} , Travelfusion^{™}, or Duffel^{™} Aggregation engine 112 thus collects content from content engines 108 for generation on one or more platforms 104, such that content from engines 108 can be accessed by devices 120.

System 100 also includes adaptation engine 116 which normalizes content from engines 108 across platforms 104 and devices 120. Adaptation engine 116 will be discussed in greater detail below.

Client devices 120 can be any type of human machine interface (HMI) for interacting with platforms 104. For example, client devices 120 can include virtual reality gear, augmented reality gear or mixed reality gear, such as headsets, tracking headsets, holographic devices, hand processors, full body sensors, haptic feedback, temperature feedback, smell feedback, treadmill or other foot tracking and feedback technology, and/or combinations of any of the foregoing. In addition, client devices 120 can include smart televisions, traditional laptop computers, desktop computers, mobile phones, tablet computers and any other device that can be used by consumers to receive content via one or more of the platforms 104 that complement the input and output hardware devices associated with a given client device 120. Such traditional client devices 120 can also have connected lights, lightstrips, speakers to provide a multi-media experience on such traditional client devices.

According to the specific example in Figure 1, device 120-1 is a virtual reality headset; device 120-2 is a first virtual reality station comprising a headset with head, hand and feet tracking technology; device 120-3 is a virtual reality headset with haptic feedback hand processors; device 120-4 is a second virtual reality station comprising a headset with hand, feet, and torso tracking and haptic feedback technology; device 120-5 is a traditional laptop computer and device 120-p is a traditional mobile telephone. Again, these are non-limiting examples, but their diversity of input and output devices is illustrative of the diverse human-machine interface aspects of the present specification.

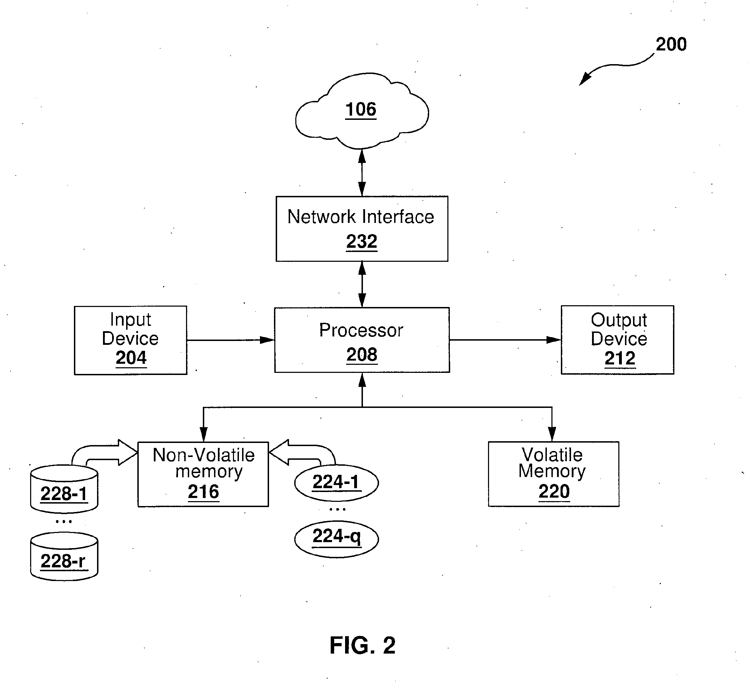

Figure 2 shows a schematic diagram of a non-limiting example of internal components of a computing device 200. The infrastructure of computing device 200, or a variant thereon, can be used to implement any of the computing nodes, including data source engine 108, data aggregation engine 112, adaption engine 116 or client devices 120. Other than client devices 120 which are based on their own unique input and output hardware form factors as human-machine interfaces, where desired and/or the context permits, one or more of the remaining nodes in system 100 can be implemented virtually inside a single computing device 200.

In this example, computing device 200 includes at least one input device 204. Input from device 204 is received at a processor 208 which in turn controls an output device 212. In the context of all the nodes of system 100, input device 204 can be a traditional keyboard and/or mouse may be connected to-provide physical input. Likewise output device 212 can be a display or audio speakers. In variants, additional and/or other input devices 204 or output devices 212 are contemplated or may be omitted altogether as the context requires.

In the specific context of client devices 120, input devices may include physical or virtual keyboards, accelerometers, input buttons, pointing devices, treadmills, temperature sensors, cameras, microphones, global positioning systems (GPS), gyroscopes, olfactometers, velocity sensors, accelerometers, medical sensors (such as pulse rate, blood pressure, stress level, skin moisture level) or any other known or future contemplated input device associated with human-machine interfaces. In the context of client devices 120, output devices may include traditional displays, head-set stereoscope virtual reality displays, augmented or mixed reality displays, haptic feedback, heating or cooling apparatuses, smell generators, sound devices, surround sound systems, smart light bulbs, smart light strips, or any other known or future contemplated output devices associated with human-machine interfaces. Client devices 120 are configured to interact with one or more platforms 104 via network 106 according to the hardware capabilities of a given client device and the corresponding interactive communication capabilities of a given platform 104. (Such hardware, software and interactive communication capabilities may be generically referred to herein as computing resource capabilities.)

Processor 208 may be implemented as a plurality of processors or one or more multi-core processors. The processor 208 may be configured to execute different programing instructions responsive to the input received via the one or more input devices 204 and to control one or more output devices 212 to generate output on those devices.

To fulfill its programming functions, the processor 208 is configured to communicate with one or more memory units, including non-volatile memory 216 and volatile memory 220. Non-volatile memory 216 can be based on any persistent memory technology, such as an Erasable Electronic Programmable Read Only Memory ("EEPROM"), flash memory, solid-state hard disk (SSD), other type of hard-disk, or combinations of them. Non-volatile memory 216 may also be described as a non-transitory computer readable media. Also, more than one type of non-volatile memory 216 may be provided.

Volatile memory 220 is based on any random access memory (RAM) technology. For example, volatile memory 220 can be based on a Double Data Rate (DDR) Synchronous Dynamic Random-Access Memory (SDRAM). Other types of volatile memory 220 are contemplated.

Processor 208 also connects to network 106 via a network interface 232 which includes a buffer, a modulator/demodulator or MODEM, over the various links and/or internet that connects the server equipment to other server equipment. Depending on the node in system 100, network interface 232 can also be used to connect a given node to another computing device that has an input and output device, thereby obviating the need for input device 204 and/or output device 212 altogether.

Programming instructions in the form of applications 224 are typically maintained, persistently, in non-volatile memory 216 and used by the processor 208 which reads from and writes to volatile memory 220 during the execution of applications 224. One or more tables or databases 228 can also be maintained in non-volatile memory 216 for use by applications 224.

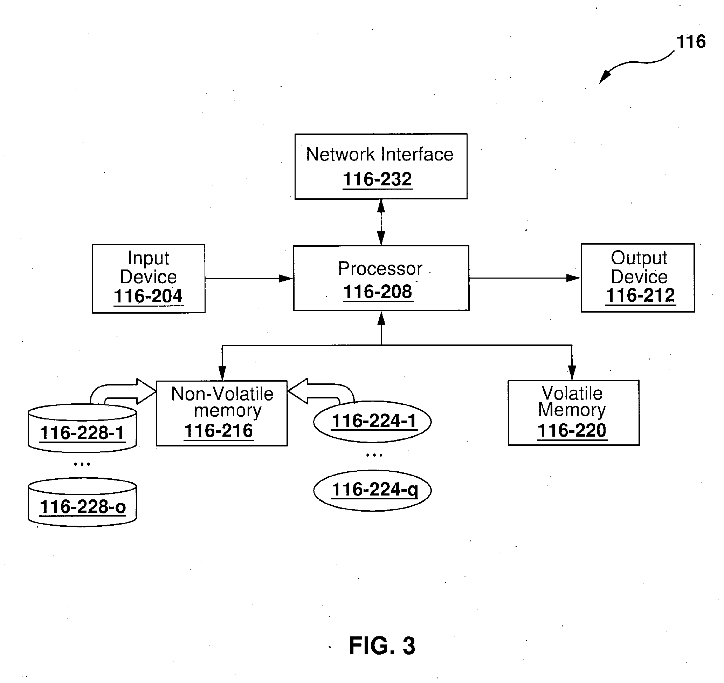

Figure 3 shows adaptation engine 116 in greater detail, identifying its sub-elements according to the structure of computing device 200 from Figure 2. The nomenclature to identify sub-elements of engine 116 in Figure 3 borrows from the analogue elements in Figure 2. Specifically, elements in Figure 3 are of the format "116-2##" whereby the "116" prefix identifying adaptation engine 116 while the "2##" suffix refers to the corresponding two-hundred series element from Figure 2. Thus, specific discussion of sub-elements on engine 116 will use this nomenclature hereafter. (This nomenclature may also be used to reference other sub-elements of nodes in system 100 without necessarily specifically showing a corresponding Figure.)

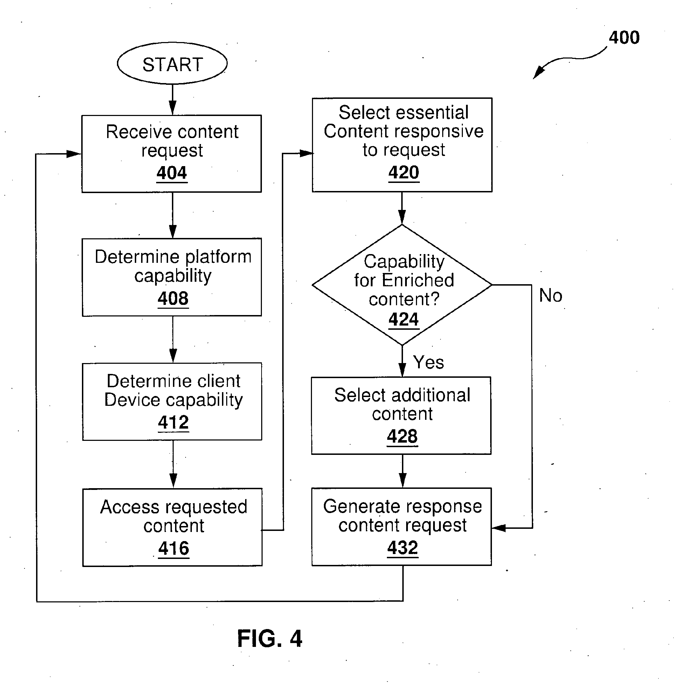

Figure 4 shows a flowchart depicting a method for multi-platform content normalization indicated generally at 400. Method 400 can be implemented on system 100. Persons skilled in the art may choose to implement method 400 on system 100 or variants thereon, or with certain blocks omitted, performed in parallel or in a different order than shown. Method 400 can thus also be varied. However, for purposes of explanation, method 400 as per the flow chart of Figure 4 and will be described in relation .to its performance on system 100 with a specific focus on adaptation engine 116 and its interactions with the other nodes in system 100.

Block 404 comprises receiving a content request. The content request can originate from a given client device 120 during a session within a session between that client device 120 and a given platform 104. (Alternatively, or in addition, the content request can originate from a given platform 104 based on an inference made by platform 104 of an experience that is to be tailored to a given client device 120.)The establishment of the session is governed by the architecture of the platform 104, according to the credential management and authentication protocols employed by the platform 104, and according to the account associated with a user of the relevant client device 120. As will be discussed in greater detail below, the specific nature of the content request at block 404 thus depends on the context of the session, but in general terms includes sending the request to content aggregation engine 112 from the platform 104.

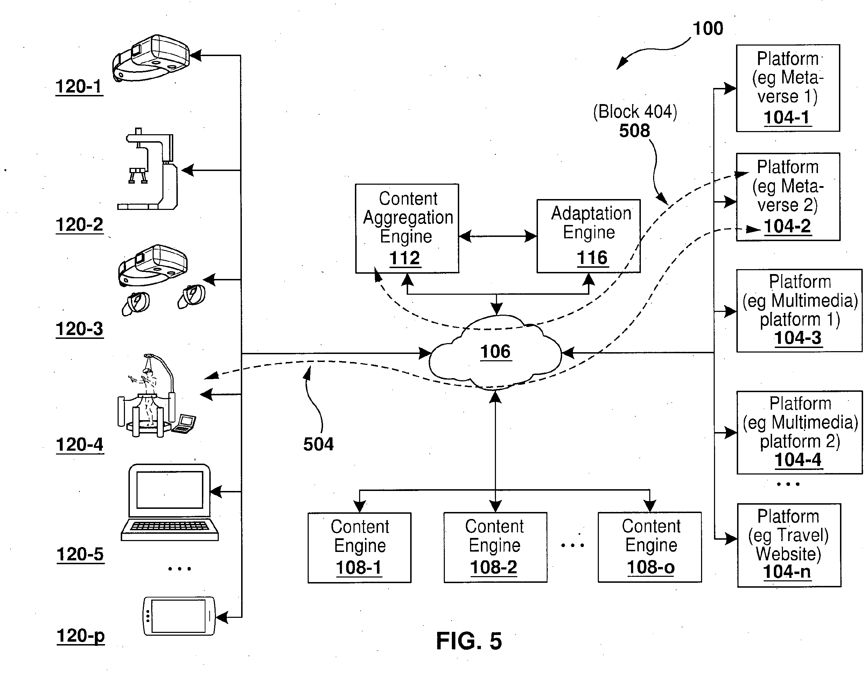

Figure 5 shows system 100 illustrating an example session 504 between virtual reality station client device 120-4 and metaverse platform 104-2 expressed as a dotted line between these two nodes. Figure 5 also shows an example request 508 (representing performance of block 404) from metaverse platform 104-2 to content aggregation engine 112 expressed as a dotted line between these two nodes.

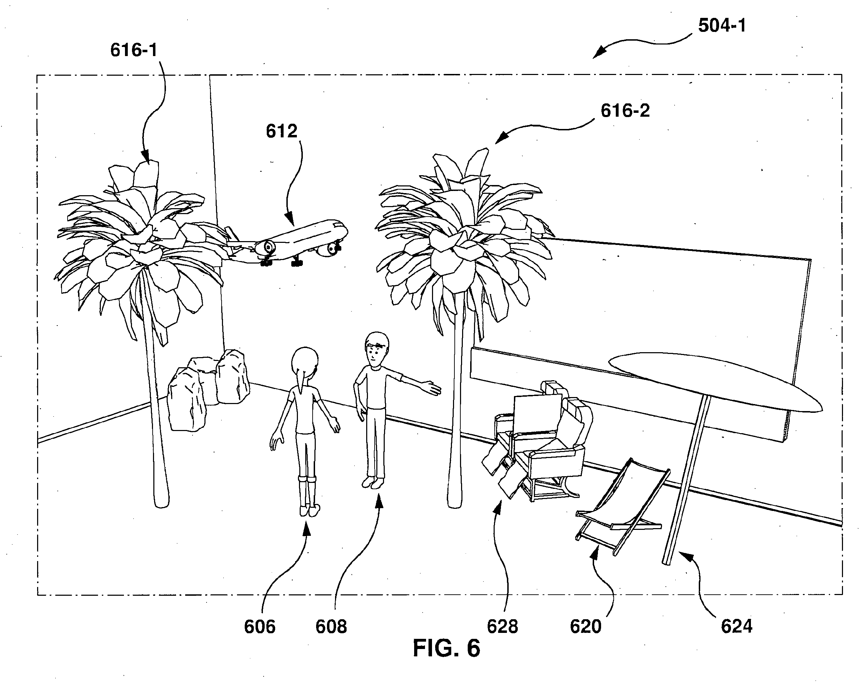

The nature of the content request is not particularly limited, but with a few illustrative examples a person of skill in the art will come to appreciate the scope of the present embodiment. As noted earlier, system 100 can have broad application to the travel industry, and thus session 504 can include the opportunity, within a virtual reality environment, to browse, interact with, select and, if desired, provide the technology infrastructure to purchase various travel services. Figure 6 shows an example illustration of a point in time of session 504-1 within a virtual reality session within metaverse platform 104-2. (The -1 suffix in session 504-1 representing the rendering by platform 104-2 point in time of the session, and this nomenclature is repeated). A person skilled in the art will recognize that the view in Figure 6 is from a third person perspective, and not from the first-person perspective that could be experienced by the user of client device 120-4 during session 504. Thus Figure 6 shows a client avatar 606 associated with the user account of client device 120-4. Figure 6 also shows a travel agent avatar 608 that may be automated or controlled by a human via another client device 120. The entire scene within session 504-1 represents a rendering of a travel agency environment, with client avatar 606 engaging a travel agent avatar 608 to browse travel services. Travel agent avatar 608 is thus shown in Figure 6 as demonstrating various objects associated with vacation travel including an aircraft 612, palm trees 616, a beach chair 620 and associated umbrella 624 and a pair of airline seats 628.

According to Figure 6, at this point in session 504-1 client avatar 606 is shown in the seat selection stage of purchasing an airline ticket respective to a given flight on aircraft 612, and thus travel agent avatar 608 is represented as showing airline seats 628 to avatar 606. Thus, according to this example, the request 508 in Figure 5 can represent a portion of seat selection sub-routine, within an overall flight seat purchasing routine, where that sub-routine includes a request for the seat map associated with aircraft 612 so that a seat within the aircraft 612 for the selected flight can be chosen as part of the purchase of the airline ticket.

At this point the overall context of system 100 should be re-emphasized. In a travel industry context, content aggregation engine 112 can access content from a number of travel industry actors who each host content engines 108. Thus the information regarding the specific flight number that utilizes aircraft 612 and the associated seat map from that flight can be sent from the content engine 108 that manages the flight schedules for that specific flight and aircraft 612. In this manner the travel agent avatar 608 within the metaverse platform 104-2 has access, via content aggregation, to a plurality of travel assets hosted by different content engines 108 as aggregated by content engine 112. Thus the specific seat selection exercise represented within session 504-1 is merely one of many different types of hospitality or travel selection exercises that can be effected within session 504, such as, by way of non-limiting examples, airline ticket purchases, hotel room selection, car rental selection, taxi bookings, excursion bookings, concerts, indoor or outdoor events and festivals, dining receptions, exhibitions, and/or any other travel experience that can occur from the beginning of travel to its conclusion. The client avatar 606 can thus be presented with a complete simulation of the complete travel experience, with browsing and selection options offered throughout the entire simulation. The seat selection request 508 and the seat selection exercise in session 504-1 is thus but one non-limiting illustrative example of the travel purchase interactions contemplated by the present specification. Where system 100 is applied to other industries beyond travel, even more possible types of interactions are possible.

Continuing now with the example of the seat selection, once request 508 (from block 404) is received at content aggregation engine 112, then method 400 advances to block 408.

Block 408 comprises determining the platform capability. In system 100, block 408 is performed by adaption engine 116 working in concert with aggregation engine 112. Adaption engine 116 is thus configured to maintain dataset 116-228-1 which includes all of the capabilities of the various platforms 104. Alternatively, such capabilities may be sent dynamically along with request 508, or a hybrid approach may be employed where some capabilities are stored locally in dataset 116-228-1 while others are sent along with the request 508. Overall, block 408 can be based on an application programming interface (API) or similar functionality provided by the operator of each platform 104. Thus, before a response to the request 508 is made, adaptation engine 116 is configured to assess what forms a response may take that will complement the functionality of the platform 104 that issued the request 508 at block 404.

Continuing with the present example, at block 408, based on the fact that request 508 came from metaverse platform 104-2, the capability determination will note that platform 104-2 is a metaverse environment with a given set of parameters for generating virtual objects and having interactions with those objects according to the specific technological architecture of metaverse platform 104-2. As can be noted from scene 504-1, the metaverse environment is rich and contemplates a virtual reality environment.

Block 412 comprises determining the client device capability. More specifically, block 412 comprises determining the capability of the client device that generated the request 508 at block 404. In system 100, block 408 is performed by adaption engine 116 working in concert with aggregation engine 112. Adaption engine 116 can thus be configured to maintain a second dataset 116-228-2 which includes all of the capabilities of the various client devices 120. Alternatively, such capabilities may be dynamically sent along with request 508, or a hybrid approach is possible where some capabilities are sent with the request 508 and others are maintained within dataset 116-228-2, Indeed, like block 408, block 412 can also be effected as part of any API associated with the relevant platform 104. Such client device capabilities are determined based on the specific input and output device hardware configurations of the human-machine interface associated with the requesting client device 120. In the example of Figure 5, virtual reality station client device 120-4 is noted to be a full body virtual reality rig, complete with haptic feedback and sensing for the eyes, hands, torso, and feet.

Block 416 comprises accessing the requested content. In the specific example being discussed in relation to a seat map for aircraft 612, it is contemplated thus that content aggregation engine 112 will access content with a respective content engine 108, such as a content engine 108 operated by the airline that owns aircraft 612 and is offering the flight of interest to avatar 606.

Block 420 comprises selecting essential content that is responsive to the request from block 404. (Selecting can be effected in different ways, such as through an inclusion process by choosing from a plurality of stored content, or by an exclusion process by filtering out certain content from the plurality of stored content.) Such essential content is the minimum set of content required to fulfill the transaction (or other interaction) occurring in session 504-1; namely, in the present non limiting example, the selection of a seat on aircraft 612. Thus, the minimum information would include what seats remain available on the aircraft in association the pricing of those seats.

Block 424 comprises determining if there is capability for providing enriched content beyond what was filtered at block 420. In the context of the present example, indeed the rich 3D virtual environment of metaverse platform 104-2 combined with the extensive set of virtual reality input and output devices on client machine 120-4 would lead to a "yes" determination at block 424.

Block 428 comprises selecting additional content. (As noted above, selecting can be effected in different ways, such as through an inclusion process by choosing from a plurality of stored content, or by an exclusion process by filtering out certain content from the plurality of stored content.) The additional selected content is responsive to the request from block 404 and matches any enhanced hardware and software capabilities of the platform 104 and the corresponding client device 104 that is carrying the respective session 504. To clarify, such enhanced hardware and software capabilities refer to any capabilities that go beyond the ability to generate the essential content from block 420. Continuing with the present example, block 428 would take the full set of rich content from block 416 to generate a very rich seat map of all available seats on aircraft 612. As will be explained further below, the degree of "richness" corresponds directly to the hardware of client machine 120 and the platform 104 that generated the request.

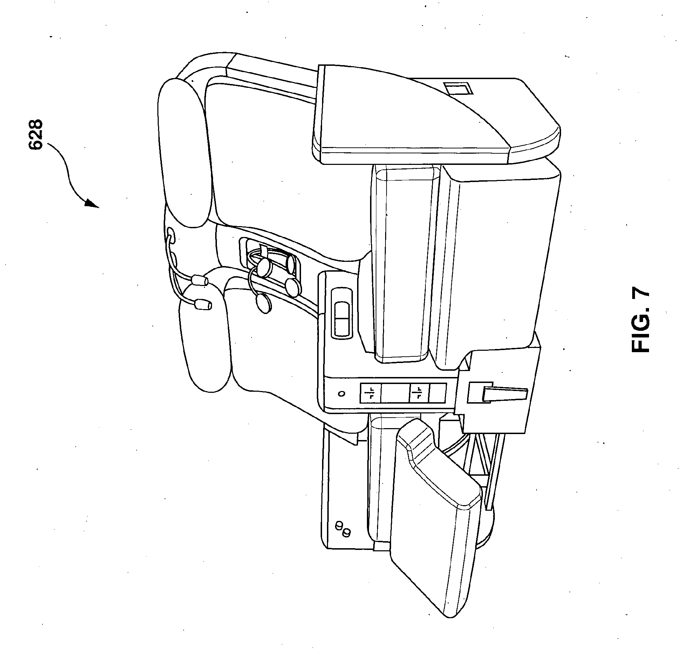

Block 432 comprises generating a response to the request from block 404 according to the selections applied at block 420 and block 428. Where different platforms 104 can accommodate the same content, but have different capabilities for presenting that content, then the generation of the response can include adaptations to the selected content respective to the specific capabilities of the target platform 104. To help elaborate, and referring again to our specific example, in association with a fully capable metaverse platform 104-2 and client device 120-4, the full seat map could include a nearly complete rendering of the entirety of the interior cabin of aircraft 612, having very rich textures and visual appearance of seat 628, such as the view of seat 628 in Figure 7. Processor 116-208 in adaptation engine 116 can thus be configured to interact with target platform 104-2 so that all features of the seat can be viewed at client device 120-4 over session 504. Furthermore, by shifting to a third person perspective avatar 606 can be shown sitting in the seat and accessing its various virtual features, all of which would mimic the actual performance of the seat on the aircraft 612. Using method 400, additional seat choices can be loaded and rendered within session 504 in similar fashion, until an actual selection of seat was made thus advancing the entire workflow of selecting various travel services. Note that the same content may be possible to generate on platform 104-3, but with different limitations, such as number of pixels or colors, or other variables, then block 432 can include an adaptation that is effected to accommodate the different limitations of platforms 104 that are otherwise capable of generating substantially the same content.

A person of skill in the art can now appreciate just where the virtual reality experience can extend to what additional filters may be applied at block 428, as such that in a fully capable client device 120-4 such as client device 120-4, the user of client device 120-4 could virtually "walk" through the cabin via feedback and input from the treadmill input/output device on client device 120-4, providing visual feedback of the entire walk through the aircraft. Occupied seats would show avatars inside them, while available seats would be empty for the avatar 606 to simulate virtually sitting various empty seats. With the full set of haptic feedback provided to hands, torso and feet, and a mapping of the physical size of the user, the user of client device 120-4 could control virtual reclining and test out the widths and foot room of the various seats with appropriate feedback and control signals being sent to the input and output device hardware associated with that client device 120-4. The inventors fully appreciate that the limits of this example correspond to the physical limits of the virtual reality input and output devices associated with client device 120-4, but also note that the rapid development of such rigs suggests a continuum of greater offerings and such offerings are likely to extend over the coming years.

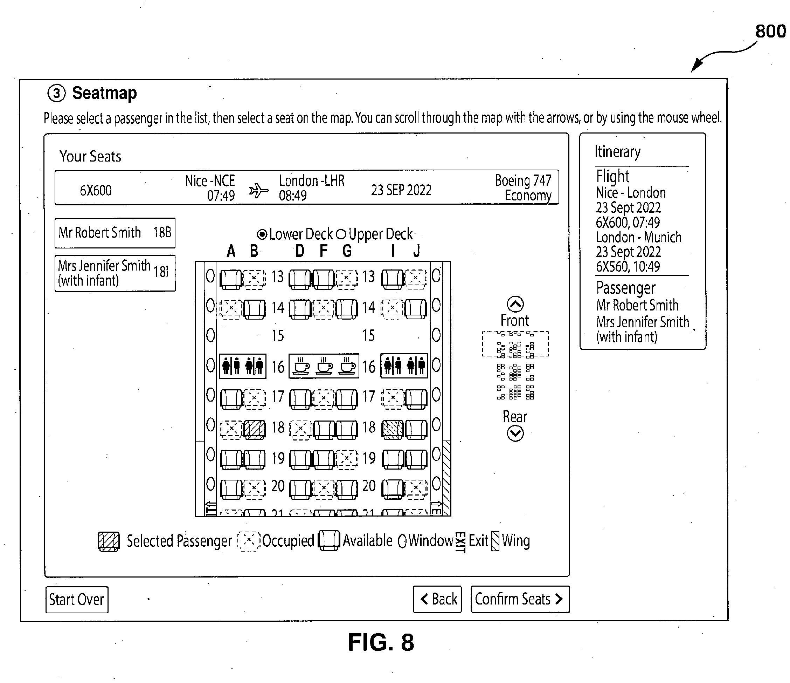

A person of skill in the art can now appreciate that system 100 also remains compatible with other client devices 120 and platforms 104. Notably, where a platform 104 or a client device 120 does not have full metaverse capability then system 100 and adaption engine 116 remains flexible to accommodate different technologies. For example, where a seat map request was generated by a mere virtual reality headset 120-1, the seat map response at block 432 would be limited to a virtual view of the inside of the aircraft, but the capability to "walk" through the aircraft would be limited to the mouse or keyboard attached to the computer that connects to the headset 120-1. There would also be curtailed or no opportunity to virtually "sit" in the seat and test the reclining and foot room. As a second example, where the seat map request was generated by laptop computer client machine 120-5, and the platform was travel website platform 104-n, then the filters applied at block 428 would be limited to generating a seat map that is consistent with currently known browser-based seat mapping and seat selection technology, in the form of a two dimensional array of boxes roughly laid out in grid, such as the example seat map 800 in Figure 8. System 100 can also accommodate traditional travel service acquisitions through voice telephony and text such as short message service (SMS).

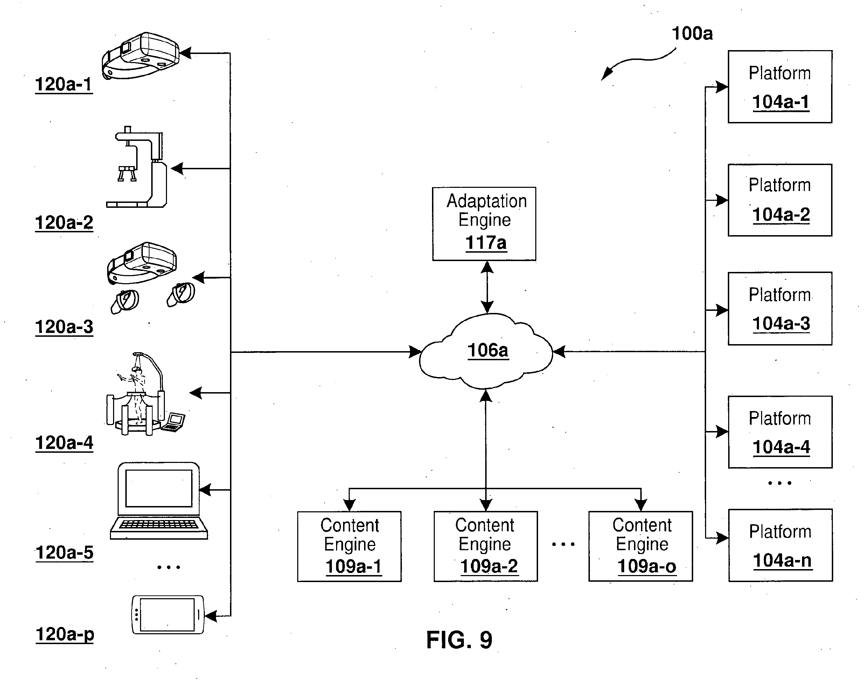

Referring now to Figure 9, in accordance with another embodiment, another system for multi-platform content normalization is indicated generally at 100a. System 100a is a variant on system 100, and thus like elements bear like references, except followed by the suffix "a". Network 106a, devices 120a and platforms 104a are substantially the same as their counterparts in system 100, although may be varied somewhat as the context requires from the following discussion. However, it is to be noted that content aggregation engine 112 is omitted from system 100a. It is also to be noted that, content engines 108 are significantly varied and are therefore omitted and replaced instead with content engines 109a. Furthermore, adaptation engine 116 is significantly varies and therefore omitted and replaced instead with adaptation engine 117a. Content engines 109a and adaptation engine 117a and their interactions with the other nodes in system 100a will be explained in greater detail below.

According to system 100a, content engines 117a are hosted by different retail entities that are establishing virtual (or augmented) reality retail stores within platforms 104a. In general, such virtual or augmented reality stores provide a consistent shopping experience across a plurality of platforms 104a through the entire sales process. (Such a sales process is sometimes referred to by the person of skill in the art as a sales funnel or sales touch points, going from, for example, marketing, lead generation, proposals, sales, conversions, payment processing, closed-won, closed-lost, retention etc. The sales process can be defined differently according to the context of what product or services is being sold and whether the process is business-to-business or business-to-consumer.) The shopping experience is thus typically adapted to the overall narrative of the platform 104a.

For example, the sales process can be reproduced in a medieval fantasy metaverse platform, replete with metaverse objects such as unicorns, satyrs, elves and magicians. In such medieval fantasy metaverse, the shopping experience is tailored to the medieval fantasy narrative, and thus while the shopping experience remains the same as a real-world retail store, the appearance of objects that fulfill the shopping experience would be consistent with the medieval fantasy. As another example, the sales process can be reproduced in a space opera replete with metaverse objects such as starships, laser cannons, multiple planets, strange aliens and intergalactic battles. Thus in a space opera metaverse, the shopping experience can be tailored the space operate narrative, and so the appearance of objects that fulfill the shopping experience would be consistent with the space opera:

In other examples, such virtual stores are configured to mimic real-world retail stores that are configured electronically according to flexible architectural designs that allow a metaverse environment to represent a real-world retail environment. Without limiting the generality of the foregoing, certain specific examples of real-world mimicry of retail stores will now be discussed in relation to platforms 104a. The virtual stores can be generated within platforms 104a according to any real or imagined environment where retail-stores may exist, such as a cluster of retail stores or a row of retail stores along a virtual commercial avenue or street, in an virtual outlet mall, or in virtual airport, train station, cruise-ship or shopping mall. One particular example application of such retail entities that will be discussed herein relate to travel agencies that, in the real-world, attract foot traffic and offer the opportunity for travelers and travel agents to interact, review travel itinerary options, and to complete the purchase of travel assets.

Notably, content engines 109a in system 100a are hosted by retail entities. Each content engine 109a maintains a model of a virtual retail store that is to be rendered across one or more platforms 104a. Note that a single content engine 109a is contemplated, but a presently preferred embodiment contemplates a plurality of content engines 109a, with each content engine 109a representing a single travel agency intending to provide substantially the same virtual retail presence across a plurality of platforms 104a. Thus, adaptation engine 117a is configured to receive models from each content engine 109a, determine criteria for rendering on each platform 104a, and to dynamically adjust the models to provide, as much as a possible, a substantially normalized virtual retail environment across all platforms 104a. In other words, as a given client device 120a accesses different platforms 104a, substantially the same virtual retail environment and experience will be perceived, for each content engine 109a, thereby increasing potential for retail transaction exposures to the hosts of content engines 109a.

Again, as a specific example, travel agencies, as a type of retail entity, will be discussed herein for illustrative purposes, but it is to be understood that the teachings herein can be applied to other types of retail entities.

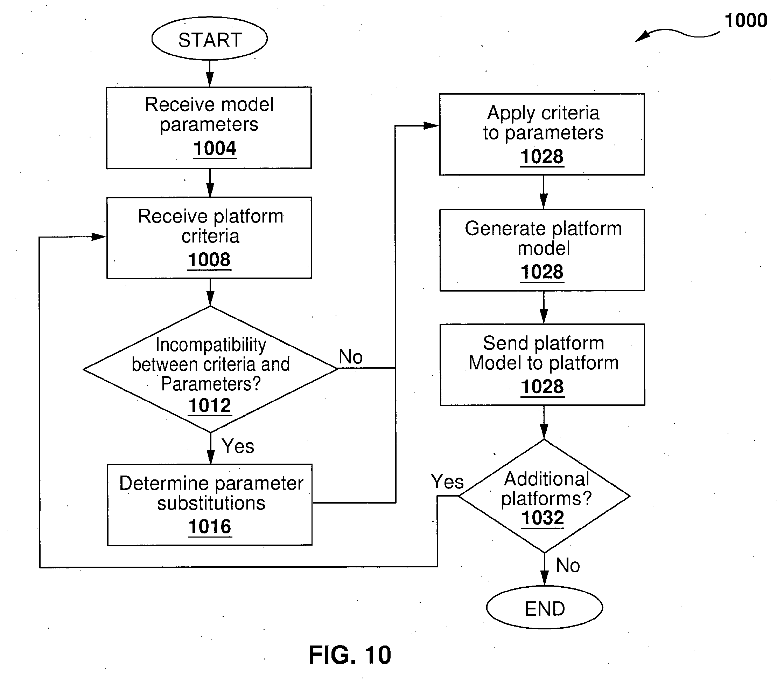

Figure 10 shows a flowchart depicting another method for multi-platform content normalization indicated generally at 1000. Method 1000 can be implemented on system 100a. Persons skilled in the art may choose to implement method 1000 on system 100a or variants thereon, (such as in combination with system 100), or with certain blocks omitted, performed in parallel or in a different order than shown. Method 1000 can thus also be varied. However, for purposes of explanation, method 1000 as per the flow chart of Figure 10 and will be described in relation to its performance on system 100a with a specific focus on adaptation engine 117a and its interactions with the other nodes in system 100a.

Block 1004 comprises receiving model parameters. In the example of system 100a, the model parameters are received at adaptation engine 117a from one of the content engines 109a. The initial parameters can be initially established via an administrator at the content engine 109a controlling input devices such as a mouse and keyboard and viewing a monitor and accessing other input/output devices in order to create a set of model parameters for delivery to adaptation engine 117a. According to the present example, the model parameters represent a virtual reality travel agency for rendering in a metaverse on one or more of platforms 104a.

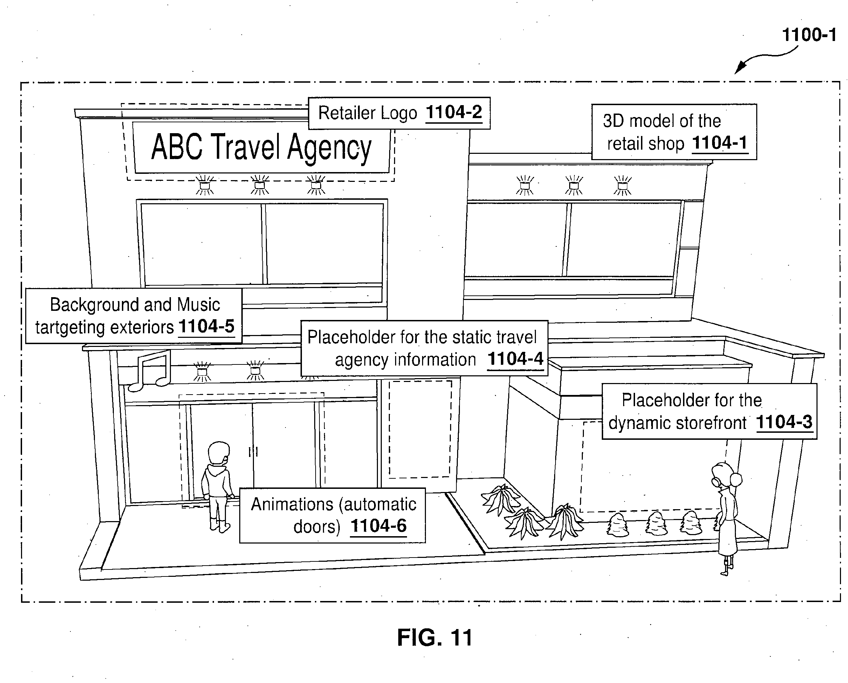

Figure 11, Figure 12, Figure 13 and Figure 14 show graphic example of a set of model templates 1100 of a virtual travel agency that can be offered as part of system 100a to an administrator at a content engine 109a. The set of model templates 1100 can be hosted by adaptation engine 117a or elsewhere as desired. The set of model templates 1100 can be customized to create a set of model parameters in fulfillment of block 1004. It is contemplated that a plurality of model templates representing different architectures can be offered, providing choice to each content engine 109a in the same manner a real-world architect would permit customization of a physical retail store. Thus the model templates 1000 represent only a single one of the options for model templates that are offered.

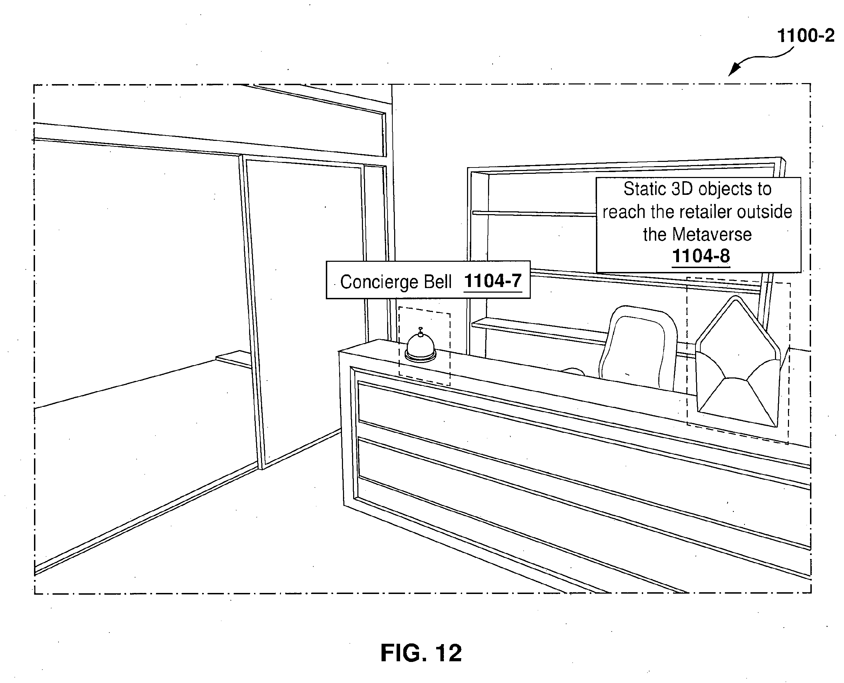

Figure 11 shows various objects that may be customized. Figure 11 shows an exterior template 1100-1. Shop model object 1104-1 represents the overall virtual architectural model for the virtual retail store, both interior and exterior. Figure 11 focuses on the exterior. Figure 12, Figure 13, and Figure 14 show interior views of the shop model object 1104-1. Model object 1104-1 thus shows a two-story building with upper floor windows and lighting, while wood cladding is shown on the side with the entrance door. Landscape features are shown on the ground out front. A single shop model object 1104-1 could be offered to all content engines 109a. However, a plurality of shop model objects 1104-1 may be offered in system 1100a, and Figure 11 shows only but one. Furthermore, if desired, the overall shop model object 1104-1 could be made available for only one of the content engines 109a and therefore provide potential exclusivity for and potential for virtual brand recognition for a given content engine 109a, such that no other content engine 109a would be able to create a confusingly similar model.

Logo model object 1104-2 can be configured to display the trademark or service mark of the entity that operates content engine 109a. The trademark can be the same as any real-world trademark registrations, thereby creating cross brand recognition across the virtual world of platforms 104a and the real-world.

Note some objects of the model parameters received at block 1104 may be flagged (such as through a "tick box") as "substitutable" across platforms 104a or "not substitutable" across platforms 104a. It is contemplated that, for example, logo model object 1104-2 may be designated as "not substitutable" due to the desire to maintain the appearance of trademark branding consistency across platforms 104a, each of having its own criteria engine consistent the individual capability of each platform 104a. (These are the same sorts of capabilities previously discussed in relation to block 408 of method 400). Accordingly, as will be discussed in greater detail below, logo model object 1104-2 would be constrained to a format or characteristics of input from content engine 109a that complies with the rendering criteria of platforms 104a.

Thus, formatting or other characteristics such as size, color, skin, noises, sounds, sizes, styles, fonts, resolutions, animations, lighting, shading, refresh rates and associated audio clips may all be constrained to a set of parameters that are known to comply with capabilities across all platforms 104a. In the context of styles and resolutions, it can be noted that certain platforms, such as Minecraft, have the criteria that objects a very low resolution and are "blocky" by design, whereas other platforms have very high resolutions and may be curved. Thus the model parameters, when inputted, adapted or substituted, consider these criteria.

Referring again to Figure 11, dynamic storefront object 1104-3 can represent a virtual display showing advertisements, offers or features or any other content. Dynamic storefront object 1104-3 thus may have static information or be configured to receive dynamic information from a source such content engine 109a, or even from one or more additional sources as content engines 108 of system 100. Dynamic storefront object 1104-3, is, in general, designed to virtually mimic the storefront of a real-world retail store.

Static storefront object 1104-4 can represent a physical sign such as "store hours" or "address" that, in general, mimics the equivalent of such information of a real-world retail store.

Music object 1104-5 includes a source of a feed of music, either looped or streams, or other audio information such as recorded voice messages, that can be played at the exterior of the model template 1100-1 in order to attract avatars of virtual passers-by, such avatars being controlled via devices 120a as previously discussed in relation to system 100.

Door animation object 1104-6 allows the configuration of the whether the doors are sliding doors or swing doors, and whether there is a physical actuator or whether a presence detection is sufficient to open the door. Audible sounds can accompany the opening or closing of the doors. A virtual doorbell may also be provided. Other door animations will now occur to those skilled in the art.

Figure 12 shows additional objects that may be customized. Firstly, foyer model template 1100-2 shows the immediate interior area of shop model object 1104-1. The interior includes a reception desk with shelving and walls. While not labelled, these objects may be customized with colors, logos, signs, artwork, etc. and as desired. A virtual concierge bell object 1104-7 is provided and as mailbox object 1104-8 is also provided. Object 1104-7 and object 1104-8 can be configured as ways to contact a real world individual who represents the retailer, such as by way of a text message, email, or phone call or an individual operating a client device 120a who represents the retailer that is respective to the content engine 109a that crated the model template 1100.

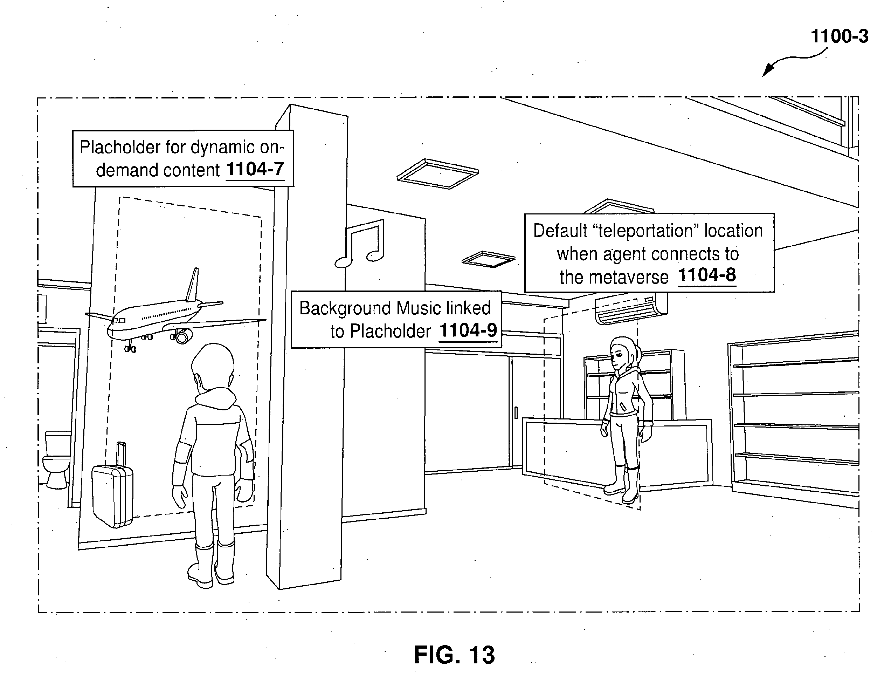

Figure 13 shows an additional interior model template 1100-3 of shop model object 1104-1. Again several objects of the template 1100-3 can be customized including colors, logos, signs, artwork, etc. Specific example objects include a "self serve" area 1104-7 where a customer avatar controlled via a client device 120a can interact with content, or an in person service area a customer avatar controlled via a client device 120a can interact with a customer -service representative avatar controlled via another client device 120a.

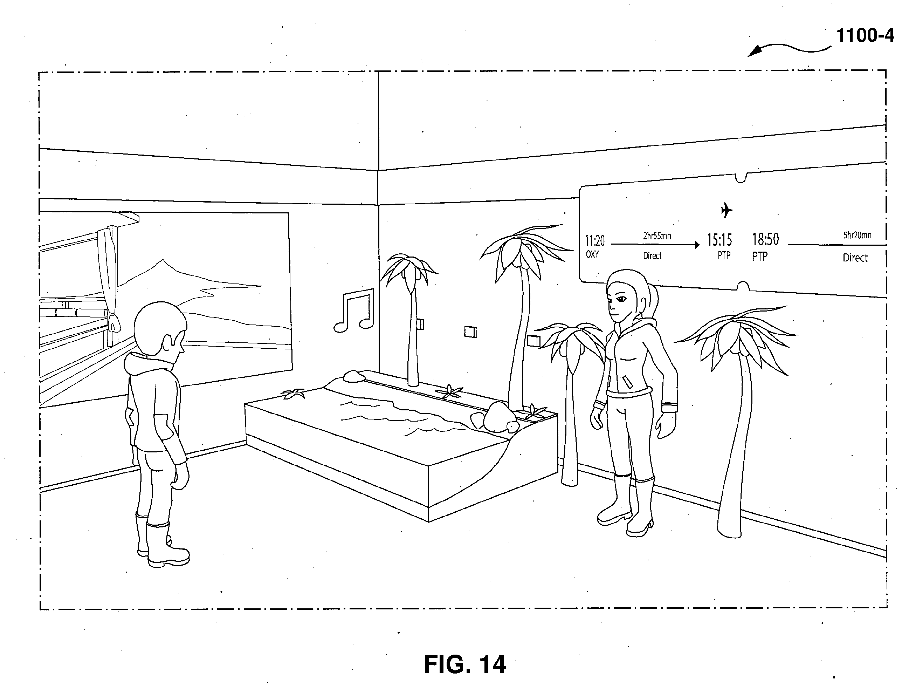

Figure 14 shows an additional interior model template 1100-4, but with further objects having been implemented including artwork, music and a display. Figure 14 shows a customer avatar controlled via a client device 120a interacting with a customer-service representative avatar controlled via another client device 120a.

A person of skill in the art will now begin to appreciate how system 100 and system 100a can be combined, as the interaction in Figure 6, Figure 7 and/pr Figure 8 can be performed within a variation of the interior model template 1100-4. In the combination of system 100 and system 100a, different virtual travel agencies according to system 100a can offer the same content from different content engines 108 within their own uniquely virtually branded environment. The combined synergies of system 100 and system 100a lead to even further efficiencies in such a combined system, as virtual travel agency retailers can render a single version of their retail store via adaptation engine 117a across several platforms 104a, while adaptation engine 116 provides immersive traveller purchasing experience and choice of content form several content providers 108. Individuals using devices 120 (and/or the analogue devices 120a) thus benefit from both a boutique experience in the form of model templates 1100 while having access to a broad range of travel experiences from content engines 108.

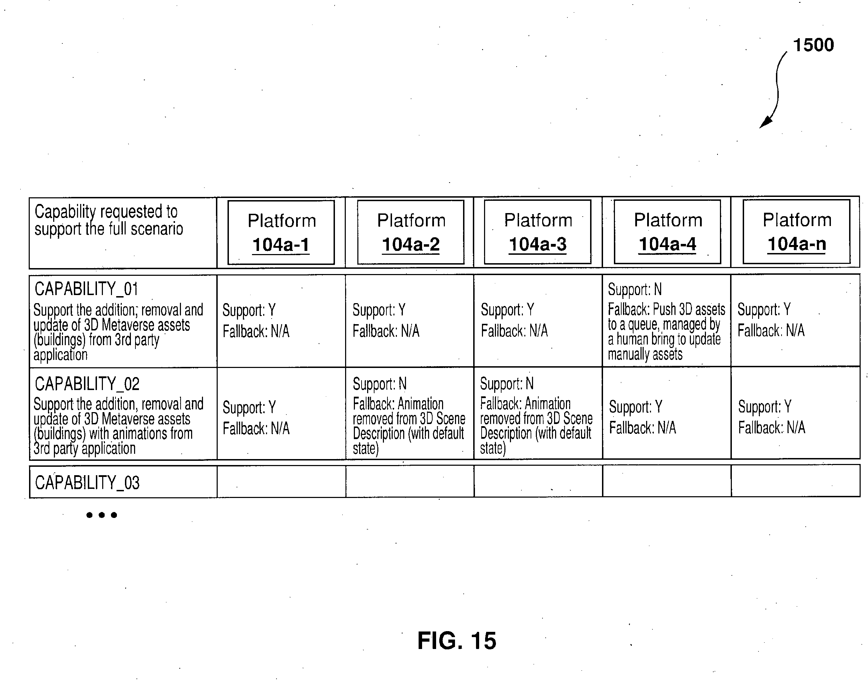

Referring again to Figure 10, having received model parameters at block 1004, at block 1008 various platform criteria are received. The way platform criteria are defined is not particularly limited and generally consistent with whatever application programming interfaces (APIs) are offered by respective platforms 104a. Figure 15 shows a highly simplified example of platform criteria defined in a matrix 1500 with capabilities defined in rows and corresponding "Yes" or "No" flags under columns representing each platform. Thus, in the example of Figure 15, the criteria can be considered a set of rules implemented as predetermined correspondences defined in the matrix or table, with a series of "fallback" or substitutions defined in the matrix 1500.

Returning to Figure 10, block 1012 comprises determining if there are incompatibilities between the criteria received at block 1008 and the parameters received at block 1004. Note the two example capability criteria given in Figure 15. But any type of capabilities and associated criteria are contemplated. To give a simple illustration, the door animation object 1104-6 may be provided with parameters at block 1004 that the doors are to be sliding and have an accompanying whistle sound. While platform 104a-1, and platform 104a-2 may be able to render door animation object 1104-6 according to these parameters, platform 104a-3 may be incapable and only able to render a swinging door.

Thus, if there are no incompatibilities at block 1012, a "no" determination is made and method 1000 advances to block 1020. However, if there are incompatibilities at block 1012, then a "yes" determination is made and method 1000 advances to block 1016. According to the previous example, a "no" determination may be made for object 1104-6 at block 1012 for platform 104-1 and platform 104a-2, and so for platform 104a-1 and platform 104a-2, method 1000 advances to block 1020 where whatever API criteria for the respective platform 104a are applied. Again, according to the previous example, a "yes" determination may be made for object 1104-6 for platform 104-3 at block 1012 and method 1000 advances to block 1016 where a substitution parameter is applied. For example, assume the platform 104a-3 can only accommodate swinging doors with no accompanying audio, then at block 1016 the swinging door parameter for object 1104-6 is substituted with a swinging door. Method 1000 then advances to block 1020 and swinging door parameter criteria is applied to the model is applied, based on the API of platform 104a-3.

Again this is but one example and a plurality of criteria based on the APIs for each platform 104a will be canvassed based on the capabilities of the respective platforms 104a and dealt with accordingly at block 1012 and, if necessary, at block 1016. Note from our previous discussion, however, that at block 1004 a given model parameter may be indicated as not being capable of substitution, in which case for that parameter a "No" determination will always be made at block 1012, with the tradeoff that the parameters provided at block 1004 may be constrained to ensure compliance with the capabilities and APIs of all platforms 104a.

Block 1024 comprises generating the model platform. In system 100a block 1024 is performed by adaptation engine 117a which renders the model parameters and uses the API of the respective platform 104a.

Block 1028 comprises sending the platform models, as generated at block 1024 to each platform 104a for rendering.

Block 1032 considers whether all target platforms have been addressed. If not, method 1000 returns to block 1008 until all such platforms 104a have been addressed.

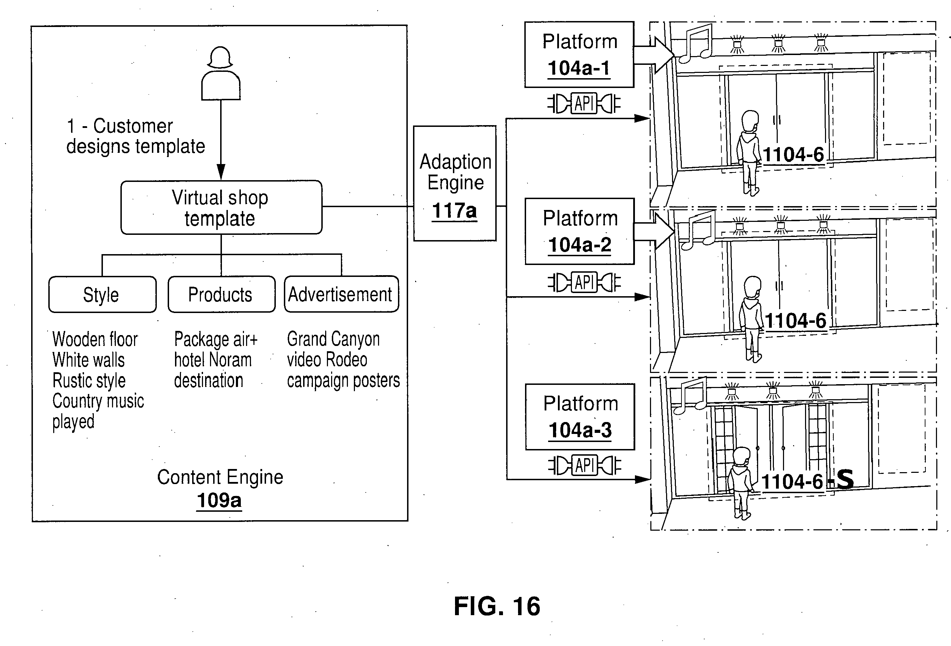

Figure 16 shows an illustrative example of how the final blocks of method 1000 may be effected, as one single model template provided at content engine 109a is received by adaptation engine 117a and then rendered on different platforms. More specifically, platform 104a-1 and platform 104a-2 are shown rendering automatic sliding doors indicated as object 1104-6; however platform 104a-3 is shown as rendering automatic swinging doors indicate as object 1104-6-S, where the suffix "S" denotes 'substitution'.

The types of substitutions at block 1016 are not particularly limited. Different types of substitution algorithms are contemplated. For example, certain platforms 104a may accommodate dynamic content for dynamic storefront object 1104-3 of Figure 11, while other platforms 104a may only support static content. Accordingly, adaptation engine 117a can be configured to mimic dynamic content by periodically pushing a sequence of "static" updates of storefront object 1104-3, thereby creating the appearance of dynamic content for dynamic storefront object 1104-3, even though the platform 104a itself may not support such dynamic updates. In this fashion, adaptation sever 117a cooperates with the anomalous platform 104a so that all platforms 104a provide substantially the same experience to a given client device 120a.

The types of substitutions at block 1016 can, in addition or in lieu of the foregoing, comprise one or more of: changing an object to an image or video of the object in the corresponding object; changing a color of the given object to a respective color allowed by the criteria; changing the color of the given object to the respective color allowed by the criteria, the respective color allowed by the criteria selected to reduce a difference between the color and the respective color; changing three-dimensional content of the given object to two-dimensional content of the corresponding object; changing at least one of shape and configuration of the object; changing dynamic content of the given object to static content of the corresponding object; changing a rounded or curved object for a blocked object (such as in Minecraft which is built in blocks); changing a customized "skin" (such as an uploaded floor or wall pattern provided at block 1004) for a predefined "skin" (such as one of predefined floor or wall patterns that are constrained to a given metaverse platform 104a).

The substitution algorithms at block 1016 may also be developed using machine learning, neural network or artificial intelligence algorithms. Continuing with the example of sliding door object 1104-6, a machine learning algorithm can monitor a human making such substitutions to satisfy the criteria of the API of platform 104a-3. After a sufficient number of substitutions, the machine learning algorithm in adaptation server 117a can make substitutions of the slide door object 1104-6-S for platform 104a-3 while learning to retain the sliding door object 1104-6 for platform 104a-1 and platform 104a-2. As another example, a customized "skin" that is uploaded at block 1004 may be substituted with a predefined "skin" at block 1016, and thus a machine learning algorithm can monitor a number of manual substitutions of customized "skins" at block 1016 that lead the machine learning algorithm to automatically, in the future, choose certain predefined "skins" as substitutes for a given uploaded customized "skin". A person of skill in the art will now appreciate how this use of machine learning can be massively scaled for developing other substitutions for other objects, as needed, at block 1016. Thus, in addition to, or in lieu of, a table such as matrix 1500, such machine learning algorithms can be implanted. Furthermore, matrix 1500, itself, can be built entirely or in part using machine learning.

A person of skill in the art will now appreciate that the components of model template 1100-1 are illustrative examples only and that variations to the foregoing are contemplated.

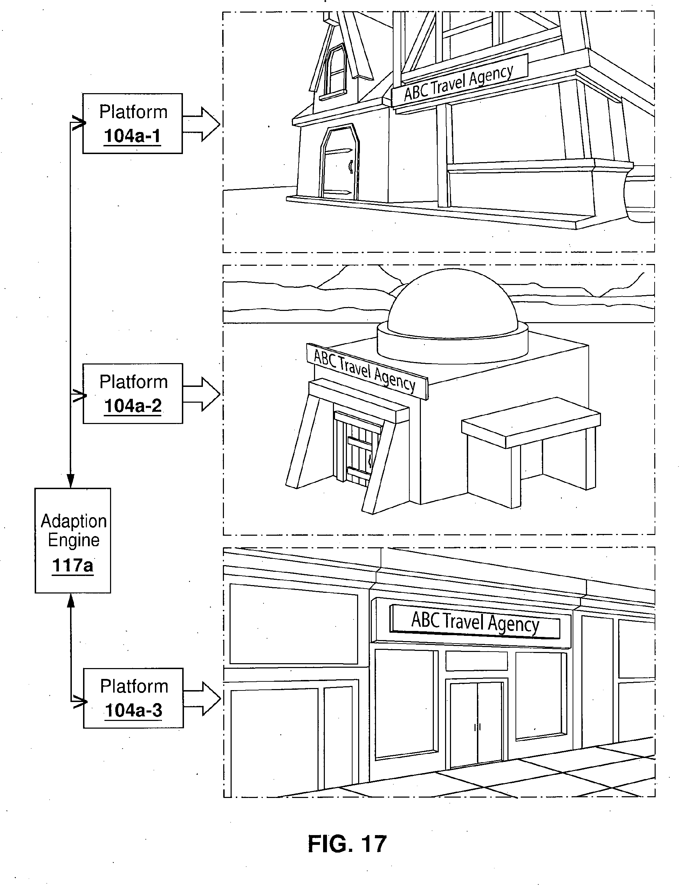

Figure 17 shows a further illustrative example of how the final blocks of method 1000 can be implemented, as another single model template provided at content engine 109a is received by adaptation engine 117a and then rendered on different platforms 104a-2. In Figure 17, none of the platforms 104a are able to render according to the model template according to Figure 11. Instead, the building object is abstracted out to a two story building, with a front entrance, but rendered on each platform 104a with an appearance that is consistent with the narrative of the platform 104a. Platform 104a-1 is shown rendering a medieval store front at high resolution; platform 104a-2 is shown rendering a space-opera store front in medium resolution; and platform 104a-3 is shown rendering a main-street building store front in low resolution. The substitutions that result in the transformations in Figure 11 all occur at adaptation engine 117a based on the single received model parameters from block 1004. Notably, however, the logo signage object 1104-2, reads "ABC Travel Agency" and has not been substituted according to the example. The interior renderings of Figure 12, Figure 13 and Figure 14 can likewise be modified to correspond with the narrative and functionality of the respective platform 104a upon which it is rendered.

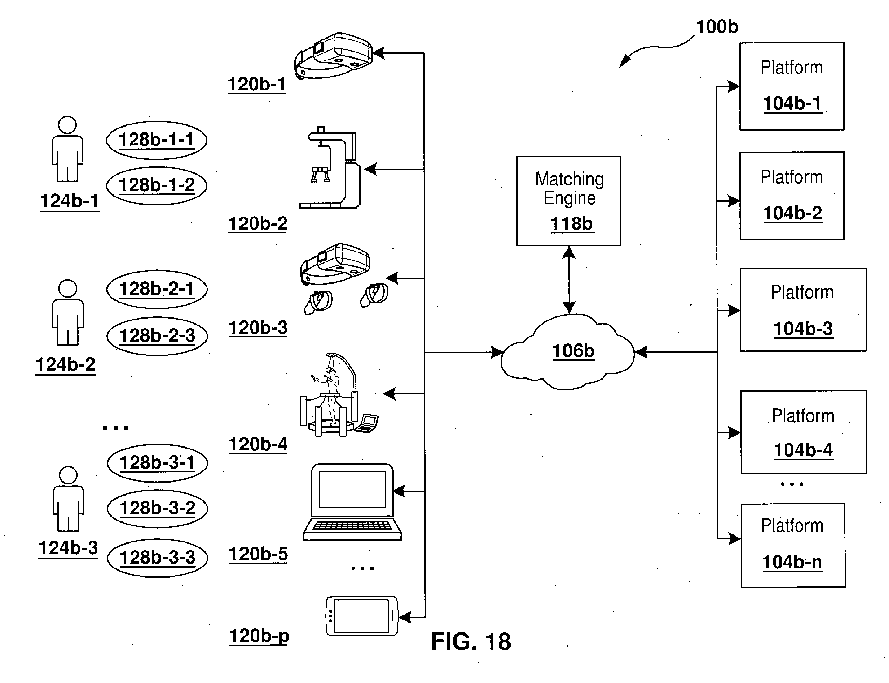

Referring now to Figure 18, in accordance with another embodiment, a system for cross platform account identification and unification is indicated generally at 100b. System 100b is a variant on system 100 and system 100a, and thus like elements bear like references, except followed by the suffix "b". Network 106b, devices 120b and platforms 104b are substantially the same as their counterparts in system 100 and system 100a, although they may be varied somewhat as the context requires from the following discussion. However, it is to be noted that content engines 108, aggregation engine 112 and adaptation engine 116 are omitted from system 100b. (However, it is to be understood that combinations of system 100, system 100a and/or system 100b, either as variations or subsets of each other, are contemplated.) It is also to be noted that system 100b includes a new element in the form of a matching engine 118b. (When system 100b is combined with system 100 or system 100a, matching engine 118b can be incorporated into aggregation engine 116 and/or aggregation engine 116a).

Also of note, system 100b also expressly shows a plurality of example users 124b, although such users 124b are implicitly present in system 100 and system 100a. System 100b also expressly shows a plurality of example accounts 128b that are associated each user 124b. Again, the plurality of such accounts 128b . are implicitly present in system 100 and system 100a. While only three example users 124b are identified in Figure 18, each with a limited number of accounts 128b, a person of skill in the art will appreciate with this specification how these are examples can be massively scaled to accommodate large numbers of different users 124b and accounts 128b.

To elaborate on the example set of users 124b in Figure 18:
a) user 124b-1 is associated with a plurality of accounts 128b-1;
b) user 124b-2 is associated with a plurality of accounts 128b-2; and
c) user 124b-3 is associated with a plurality of accounts 128b-3.

To elaborate on the example set of accounts 128b in Figure 18:
a) example user 124b-1 is shown as having two accounts, namely:
   a. account 128b-1-1 which refers to the user account associated with platform 104b-1; and
   b. account 128b-1-2 which refers to the user account associated with platform 104b-2.
b) example user 124b-2 is shown as having two accounts, namely:
   a. account 128b-2-1 which refers to the user account associated with platform 104b-1;
   b. account 128b-2-3 which refers to the user account associated with platform 104b-3.
c) example user 124b-3 is shown as having three accounts, namely:
   a. account 128b-3-1 which refers to the user account associated with platform 104b-1;
   b. account 128b-3-2 which refers to the user account associated with platform 104b-2; and,
   c. account 128b-3-3 which refers to the user account associated with platform 104b-3.

The nomenclature for the reference characters for users 124b is the same as the other reference character nomenclatures used for other elements in system 100, system 100a and system 100b. The nomenclature for the reference characters for the accounts 128b follows the same logic according to the format "128b-X-Y" for the account and the format "124b-X" for the user and the format "104b-Y" for the platform. The variable "X" corresponds to the user number, and the variable "Y" corresponds to the platform number. These nomenclatures are specifically explained so that certain examples can be discussed below to assist in understanding how to implement system 100b as a whole.

Thus, users 124b can each access any platform 104b for which they have an account using any of the client devices 120b. No particular pairing between a given device 120b and a given account 128b is required, subject to any hardware requirements of a given platform 104b.

Matching engine 118b can be based on the same hardware infrastructure as aggregation engine 116 and, where system 100b is incorporated into system 100 and/or system 100a, then matching engine 118b can be integrated into either aggregation engine 116 and/or aggregation engine 116b. As will be explained in greater detail below, matching engine 118b is generally configured to interact with platforms 104b, devices 120b and accounts 128b to generate a unified account identifier for each user 124b.

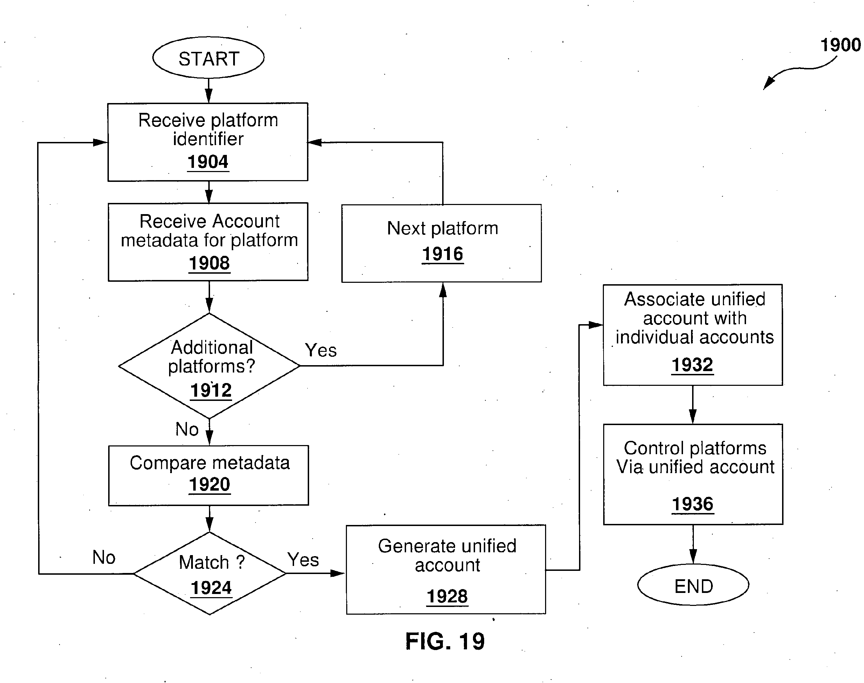

Figure 19 shows a flowchart depicting a method for cross platform account identification and unification indicated generally at 1900. Method 1900 can be implemented on system 100b. Persons skilled in the art may choose to implement method 1900 on system 100b or variants thereon, (such as in combination with system 100 and/or system 100a), or with certain blocks omitted, performed in parallel or in a different order than shown. Method 1900 can thus also be varied. However, for purposes of explanation, method 1900 as per the flow chart of Figure 19 will be described in relation to its performance on system 100b with a specific focus on matching engine 118b and its interactions with the other nodes in system 100b.

Block 1904 comprises receiving a platform identifier. In accordance with system 1900b, block 1904 is performed by matching engine 118b which is generally aware of the existence of and network addresses of platforms 104b. In accordance with a specific illustrative example, block 1904 begins with platform 104b-1. Block 1904 can occur in real-time or can occur asynchronously or "off-line", in that the platform identifiers can be received, stored and maintained at matching engine 118b at any time.

Block 1908 comprises receiving account metadata for the platform identified at block 1904. Block 1908 thus contemplates receiving metadata associated with one or more users 124b respective to the platform(s) 104b identified at block 1904. In accordance with the present illustrative example, a limited discussion will focus on user 124b-1 and the associated accounts 128b-1, but a person of skill in the art will come to appreciate how method 1900 can scale to all users 124b and all platforms 104b. However, continuing with the illustrative example, since the identified platform at block 1904 is platform 104b-1, then at block 1908, account metadata associated with account 128b-1-1 will be received at block 1908.

Account metadata can be any type of identifying data including information and/or activities that are associated with the relevant account 128b. It is contemplated that, in a presently preferred embodiment, account metadata can include deterministic data and probabilistic data.

Deterministic data can include personally identifiable information (PII) such as name, email address, session connection identifiers, social media handles (e.g. for Twitter, Instagram, etc.), non-fungible token (NFT) identifiers, photographs, avatar skins and artwork, travel record locators, geo-location, phone numbers, social insurance numbers, credit card numbers, bank account numbers, home addresses, hardware media access control (MAC) identifiers, International Mobile Equipment Identity (IMEI) numbers, and static IP addresses. In general, such deterministic data include unique identifiers that are provided to the platform 104b in association with the account 128b for the platform 104b, and may be derived from the relevant client device 120b. For example, when provisioning account 128b-1-1 on platform 104b-1, user 124b-1 may be required, or optionally requested, to provide deterministic data in association with that account 128b-1-1. Alternatively, or in addition, deterministic data may be inferred, such as geo-location information derived from the relevant client device 120b. Alternatively, or in addition, the deterministic data may be generated, such as a travel record locator that may be generated during a transaction involving the purchase of a travel service on a given platform 104b. In the example of NFTs, an NFT may be owned by a given user 124b and associated with the relevant account 128b. One can envision, for example, a platform 104b requiring a metaverse avatar, and an NFT of an original piece of artwork for an article of clothing that may be provided as part of the artwork for the avatar.

Probabilistic data can include information that can be used to infer a likelihood of association between the ultimate identity of a given user 124b and a given account 128b. Probabilistic data can include lists of hobbies, interests and friend connections. For example, when provisioning account 128b-1-1 on platform 104b-1, user 124b-1 may be required, or optionally requested, to provide probabilistic data in the form of a list of interests, hobbies and friend connections.

Probabilistic data can also include behavioural patterns, such as a "walk pattern" of how a given avatar is typically navigated by a given user 124b based on user inputs provided at the associated client device 120b. Further probabilistic data can include use of language and dialect, moods and behaviours, associations with groups, online purchasing patterns, avatar clothing styles, use of emojis or other reactions to events, and other behavioural patterns.

It is to be understood that context may dictate whether account metadata is deemed to be probabilistic or deterministic. For example, a MAC address for a given device 120b that is associated with many different logins from different accounts 128b may be better viewed as a probabilistic data identifier, whereas a MAC address that is constantly associated over long period of time with the same account 128b with a static geo-location may be inferred to be a deterministic data identifier.

It is to be understood that method 1900 can be adapted to accommodate appropriate legal and ethical limitations to the access of personally identifiable information. Indeed, one of the advantages of the present invention can be the ability to generate a unified account that may respect the privacy of a given user 124b. At the same time, the unified account may still permit the control of various platforms 104b to include the delivery of targeted content towards that given user 124b, whose privacy is maintained. However, maintaining such privacy is not necessarily required in all implementations of system 100b as in certain contexts a given user 124b may provide express authorization for the identity of that user 124b to be disclosed.

At block 1912, a determination is made as to whether there are any further platforms to examine. It is presently preferred that a least two different platforms 104b are examined and accordingly at block 1912 a yes determination is reached leading to block 1916 which advances to the next platform. According to the specific example, the next platform identifier is platform 104b-2.

Block 1904 and block 1908 are thus repeat again, but this time for platform 104b-2. Thus, metadata for platform 104b-2 is received at block 1908, and accordingly, metadata associated with account 128b-1-2 is received at block 1908.

The loop defined by block 1904, block 1908, block 1912 and block 1916 can thus repeat for every platform 104b in system 100b. It is to be understood that method 1900 can be massively scaled to collect metadata for each account 128b for each user 124b for each platform 104b. To be clear, the simple loop in method 1900 is illustrative and, particularly as system 100b scales, more complex programming techniques can be employed whereby, for example, certain blocks occur asynchronously, or via multi-threading, parallel processing or other techniques. The loop can also run continuously, constantly refreshing data across system 100b according to changes in platforms 104b, accounts 128b, client devices 120b and users 124b. However, in accordance with our simplified illustrative example, user 124b-1 only has two accounts 128b-1 and thus the loop can exit and method 1900 can advance to block 1920.

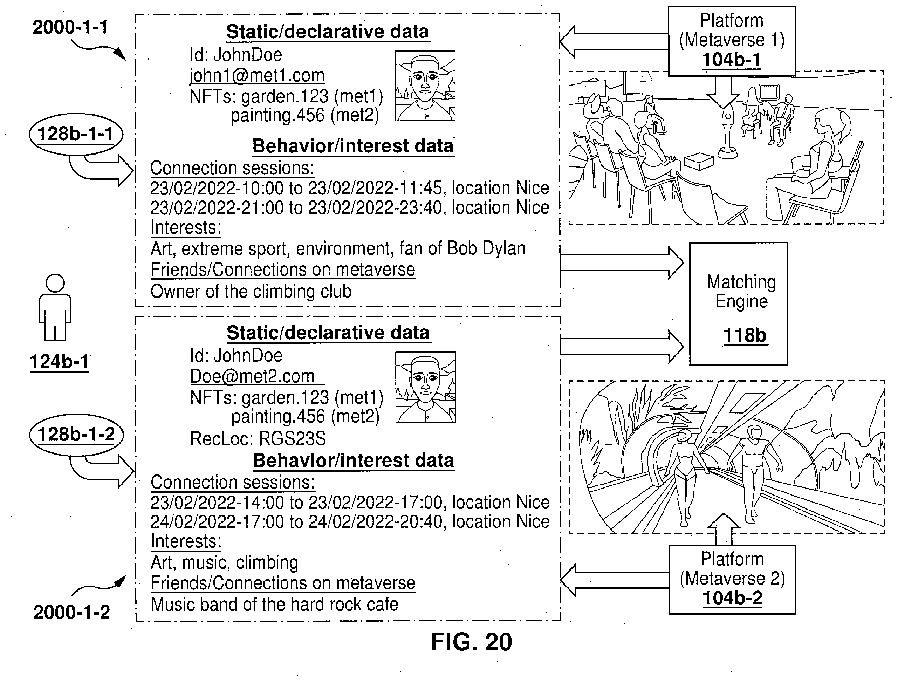

Figure 20 thus shows an example of the state of non-volatile storage of matching engine 118b for our simplified example just prior to commencement of block 1920. In Figure 20, a first account metadata record 2000-1-1 is associated with account 128b-1-1 and a second account metadata record 2000-1-2 is associated with account 128b-1-2. Account metadata records 2000 thus include identifying data in the form of static or declarative data in the form of login IDs, email addresses, NFTs, as well as behavioural or interest data in the form of connection session login times, interests and friend connections within the relevant platform 104b. Metadata records 2000 thus include the metadata shared by the platform 104b (profile ID, email address, hobby, etc.) and can also include inferred behavioural characteristics. As noted, behavioural characteristics can include "walking behaviour" within the metaverse, purchase history, groups of friends and the like. Note that behavioural characteristics can be captured by matching engine 118b, or by platforms 104b. Behavioural characteristics and can also include inferred behavioural characteristics captured by adaptation engine 117a or adaptation engine 116 which were not explicitly provided by the platform 104b. Figure 20 shows representations of metadata records 2000 being received from their respective platforms 104b at matching engine 118b.

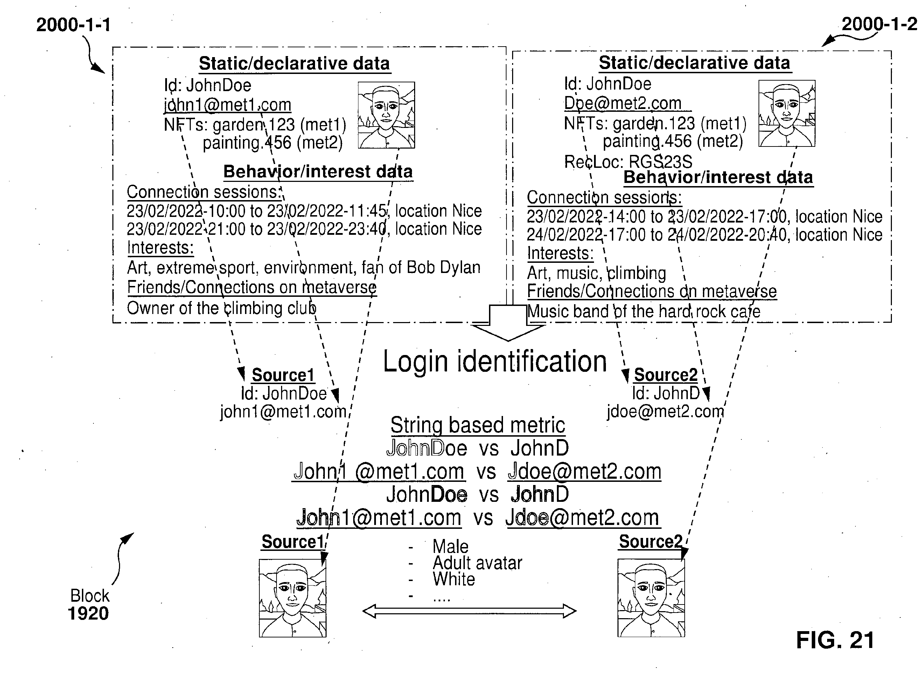

Returning again to Figure 19, block 1920 comprises comparing the account metadata collected at block 1908. Example performance of block 1920 according to our specific example is shown in Figure 21. Figure 21 shows fields from metadata records 2000-1 being directly associated and compared. Specifically the loginid "JohnDoe" from record 2000-1-1 has a string comparison made against the loginid "JohnD" from metadata record 2000-1-2, leading to a first probabilistic indication that metadata records 2000-1 are associated with the same user 124b. Additional indications include a potential alignment between the email address "john1@met1.com" from record 2000-1-1 and the email address "doe@met2.com" from record 2000-1-2. Additional indications include the similarity between the two profile pictures from each record 2000-1, as well as an image recognition algorithm that identifies the demographic of the subject of the profile pictures as being white and male, which are potential demographic matches with an individual of the name "John Doe".

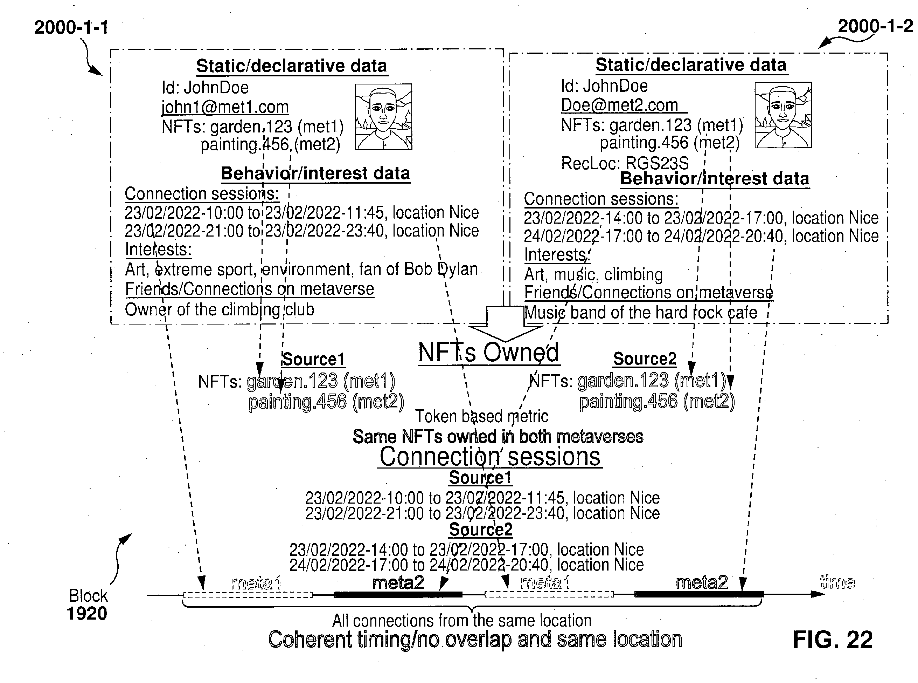

Further example performance of block 1920 continues in Figure 22, where additional fields from metadata records 2000-1 are directly associated and compared. Specifically, the NFT identifiers "garden.123 (met1)" and "painting.456 (met2)" are found within both record 2000-1-1 and record 2000-1-2. Since NFTs are legally owned by a single individual, this is a strong inference that record 2000-1-1 and record 2000-1-2 have a common user 124b. Further comparisons between connection session times in record 2000-1-1, namely a first connection at "23/02/2022-10:00 to 23/02/2022-11:45, location Nice" and a second connection at "23/02-22-21:00 to 23/02/2022-23:40, location Nice" dovetail with the connection session times in record 2000-1-2, namely, "23/02/2022-14:00 to 23/02/2022-17:00, location Nice" and "24/02/2022-17:00 to 24/02/2022-20:40, location Nice", indicating that the same user 124b was alternating sessions between platform 104b-1 and platform 104b-2.

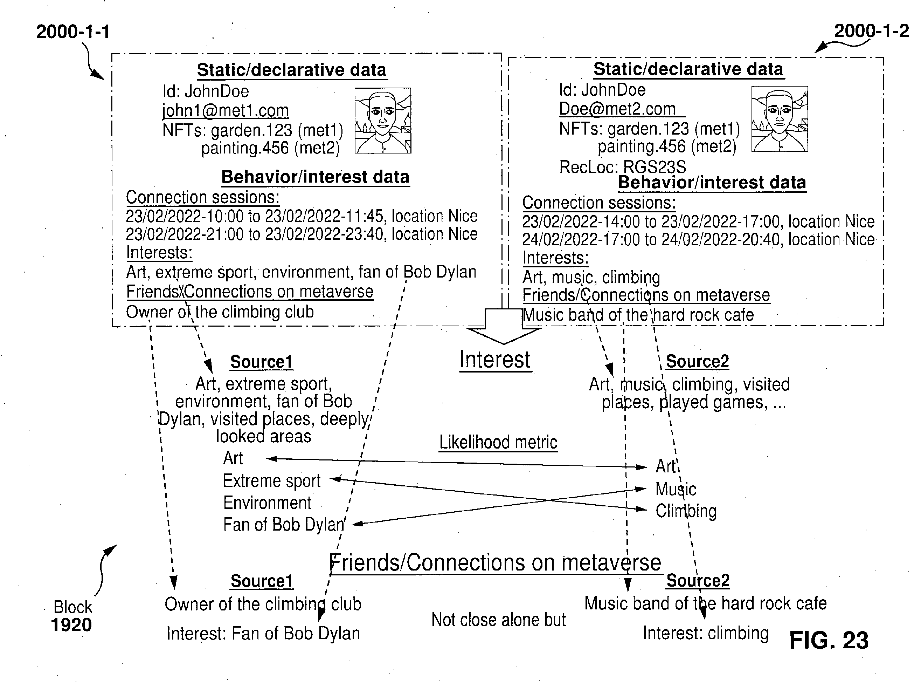

Further example performance of block 1920 continues in Figure 23, where still further additional fields from metadata records 2000-1 are directly associated and compared. Specifically, the self-identified interests from record 2000-1-1, namely "Art, extreme sport, environment, fan of Bob Dylan" are compared with the self-identified interests from record 2000-1-2 namely, "Art, music and climbing". While these specific lists of interests are not identical, a likelihood of association can be made between "Art" and "Art", and "Extreme sport" and "Climbing", and "Fan of Bob Dylan" and "Music". Additional comparisons are made between different elements of each record 2000-1, for example that record 2000-1-1 shows "Owner of climbing club" as a friend or connection in platform 104b-1, while record 2000-1-2 shows "climbing" as an interest, further indicating a match between record 2000-1-1 and record 2000-1-2, further suggesting that each record 2000-1 is associated with the same user 124b.

Thus, the comparisons in Figure 21, Figure 22 and Figure 23 can be combined such that while each individual comparison may suggest that each record 2000-1 is associated with the same user 124b, the combined probabilities create an even greater indication that each record 2000-1 indeed originates from the same user 124b. Specifically, the combined matching score from Figure 21, Figure 22, and Figure 23 suggests that user 124b-1 is the common holder of account 128b-1-1 and account 128b-1-2.

It should be noted that various machine learning approaches can also be applied to the comparisons made at block 1920. Such approaches can include machine learning and/or deep-learning based algorithms and/or neural networks, and the like, which are trained to improve the electronic identity verification approaches discussed herein. Furthermore, in these examples, performance of block 1920 may be operated by a processor within matching engine 118b, or another processor, in a training mode to train the machine learning and/or deep-learning based algorithms and/or neural networks accordance with the teachings herein.

The one or more machine-learning algorithms and/or deep learning algorithms and/or neural networks may include, but are not limited to: a generalized linear regression algorithm; a random forest algorithm; a support vector machine algorithm; a gradient boosting regression algorithm; a decision tree algorithm; a generalized additive model; neural network algorithms; deep learning algorithms; evolutionary programming algorithms; Bayesian inference algorithms; reinforcement learning algorithms, and the like. However, generalized linear regression algorithms, random forest algorithms, support vector machine algorithms, gradient boosting regression algorithms, decision tree algorithms, generalized additive models, and the like may be preferred over neural network algorithms, deep learning algorithms, evolutionary programming algorithms, and the like. To be clear, any suitable machine-learning algorithm and/or deep learning algorithm and/or neural network is within the scope of present specification.

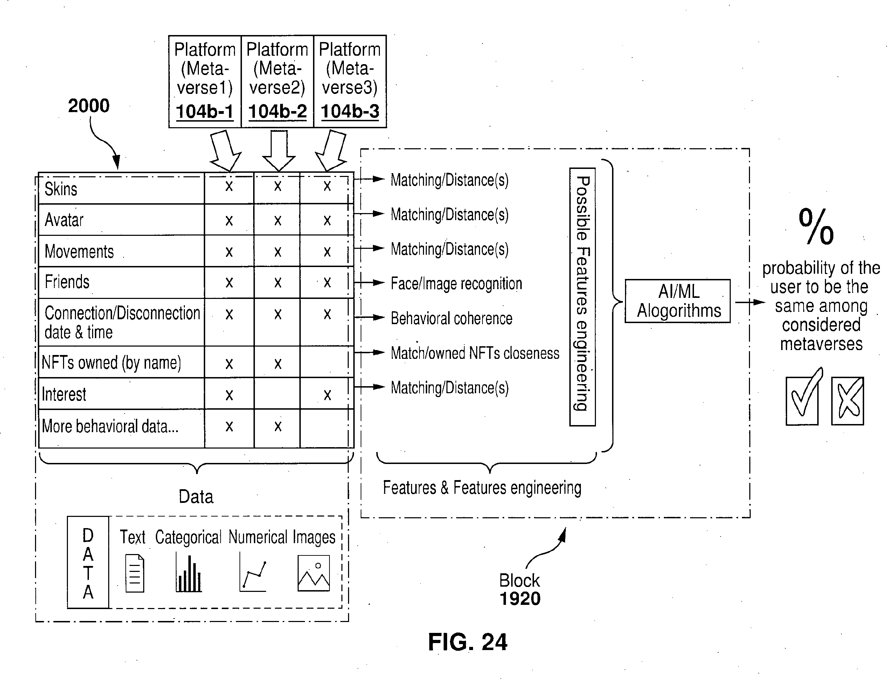

Figure 24 shows a representation of how metadata records 2000 can be associated with a machine learning algorithm that is applied at block 1920. In Figure 24, metadata records 2000 can include data regarding the skins, avatar, movements, friends, connection/disconnection dates and times, NFTs, interests and other behavioural data that can be textual, categorical, numerical or graphical, for each account 128b-X-Y across each respective platform 104b. Block 1920 can apply mathematical techniques, implemented in the processor of matching engine 118b, such as matching distances, facial recognition, behavioural coherence, all of which can be applied within a machine learning algorithm to arrive at a probability of a match across a given set of accounts 128b that the particular set of accounts 128b is associated with the same user 124b. The machine learning algorithms can be taught by way of human verification including expressly asking a user 124b to confirm the association and/or to anchor the verification for a sample set within a known absolute deterministic identifier across all accounts 128b such as a social security number or passport number. A sufficient number of affirmed associations of a common user 124b for a set of accounts 128b can then lead to sufficient training of the machine learning algorithm so that other performances of block 1920, where no affirmative verification exists, can still lead to an assignment of a probability of a match.

Thus, referring again to Figure 19, at block 1924 a determination is made as to whether the comparison performed at block 1920 led to a match. A "no" determination leads method 1900 back to block 1904, or alternatively method 1900 can simply terminate. A "yes" determination at block 1924 leads to block 1928 at which point a unified account or other unique identifier is generated for assignment to the collection of accounts 128b that led to the match at block 1924.

The "yes" determination at block 1924 can be reached when a sufficient probability level is reached. Any human verification that a collection of accounts 128b that were compared at block 1920 can thus be dispositive of a confirmed "yes" determination. However, any probability threshold of a confidence interval can also lead to a "yes" determination at block 1924. The threshold, for example, can be about eighty percent, or it can be about one-hundred percent. Overall, the threshold is configurable and can be set as desired.

Block 1928 comprises generating a unified account and block 1932 comprises associating the unified account (or other unique identifier) from block 1928 with the collection of accounts 128b from block 1920 that led to the "yes" determination at block 1924. The unified account will thus combine all deterministic data, probabilistic data, inferred data and any other metadata from block 1908.

Again, there can be machine learning functions or feedback loops or the like incorporated into method 1900. For example, such a function can correct and learn from a prior erroneous "yes" determination at block 1924. The error may have occurred because, for example, a certain threshold level was reached during a previous iteration, even though the threshold level may not have been correct. Accordingly, a correction can be applied that adjusts the threshold level and the resulting unified account at block 1932 can be deleted or otherwise corrected.

Block 1936 comprises controlling the various platforms 104b based on sessions associated with the unified account. The nature of the form in which the platforms 104b are controlled is not particularly limited, and indeed the type of the controlling can inform the confidence probability percentage that leads to the "yes" determination at block 1920. For example, assume that system 100, system 100a and system 100b are combined into a single system. Also assume a given user 124b is noted to have begun the purchase of travel services on platform 104b-1 (where platform 104a-1 and platform 104b-1 are identical), but has not submitted payment. Accordingly, if the same user 124b joins platform 104b-2 (where platform 104a-2 and platform 104b-2 are identical) then user 124b can be provided with a continuation of the travel services purchase experience, being given the opportunity to complete the payment processing on platform 104b-2 for the travel services that were selected on platform104b-1. Alternatively, instead of simply assuming there was a match at block 1924, an additional authentication step can be provided urging the user 124b to return to platform 104b-1 and enter a code generated on platform 104b-2 that will positively confirm the match. (in other words, user 124b can be asked to directly affirm the "yes" determination at block 1924.) In this example, the "yes" determination at block 1924 will be based on a threshold of one-hundred-percent.

As another example, once again assume that system 100, system 100a and system 100b are combined. If only a fifty-percent (or some other threshold well less than one-hundred-percent) probability of a match was made at block 1924, then a detection that a given user 124b-3 has transitioned from platform 104b-1 to platform 104b-2 may include controlling platform 104b-2 to continue to show content that is deemed relevant to user 124b-3 based on activity that was occurring on platform 104b-1. To elaborate, if user 124b-3 was detected as browsing for Caribbean cruises on platform 104b-1, then a detection of user 124b-3 on platform 104b-2 could lead to the generation of virtual advertisements within the metaverse of platform 104b-2 for Caribbean cruises. A failure to have made a completely accurate match at block 1924 will not lead to any serious consequences.

As another example of block 1936, assume that in system 100b (or a combination of system 100 and/or 100a) a functionality is provided to "teleport" from one platform 104b-1 to another platform 104b-2. The unified account from block 1932 can be used to automatically authenticate a given user 124b across each platform 104b, thereby facilitating the seamless "teleportation" function.

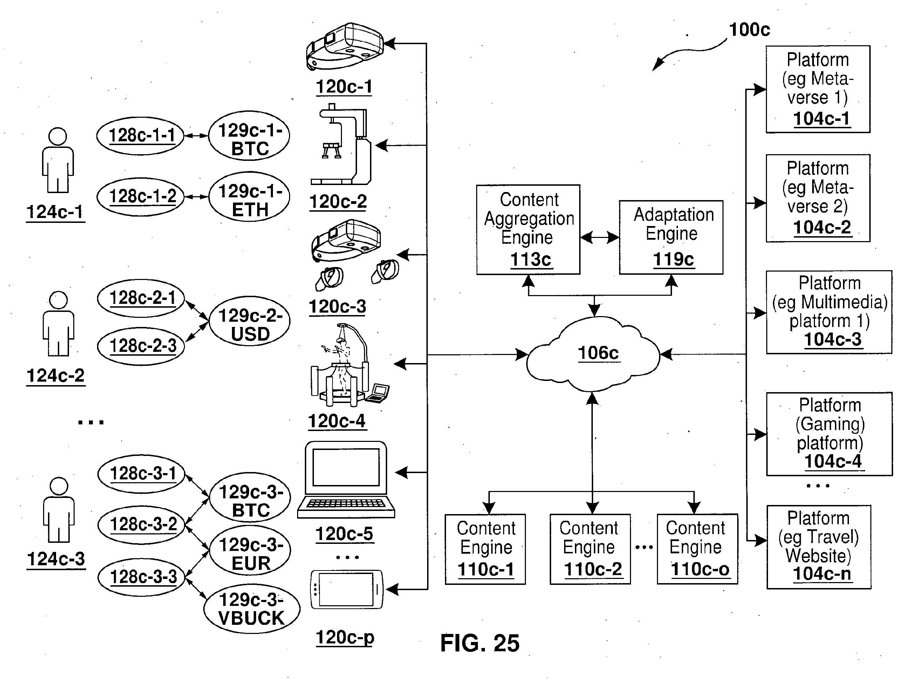

Referring now to Figure 25, in accordance with another embodiment, a system for normalization of electronic message content representing pricing across different platforms is indicated generally at 100c. System 100c is a variant on system 100, system 100a and system 100b, and thus like elements bear like references, except followed by the suffix "c". Network 106c, devices 120c, platforms 104c, users 124c and accounts 128c are substantially the same as their counterparts in system 100b, although they may be varied somewhat as the context requires from the following discussion. However, it is to be noted that aggregation engine 112 is omitted and replaced with a currency exchange engine 113c. Furthermore, content engines 108 are replaced by content engines 110c, and adaptation engine 116 is replaced with adaption engine 119c.

(It is to be understood and reiterated that combinations of system 100, system 100a, system 100b, and/or system 100c are contemplated, including variations or subsets. Thus, the nodes that are omitted from system 100c can be included in system 100c and/or various of those nodes can be merged or distributed according to the context and/or the operators of such nodes. A person of skill in the art will now appreciate such possibilities regardless of which combinations of system 100, system 100a, system 100b and system 100c are implemented.)

In general terms, system 100c is configured to normalize certain aspects of e-commerce functionality across platforms 104c, including the management of electronic messages and normalization of content in the form of pricing for products or services. Thus, content engines 110c can be based on content engine 108 and/or content engines 109a and/or any other type of e-commerce engine that provides content representing goods or services that are for sale.

For the following discussion it is to be noted that content engines 110c generate content relating to the actual good or service, such as travel service offerings according to the examples given in Figure 6, Figure 7 and Figure 8, and also generate pricing content to accompany those travel service offerings. The inclusion of pricing is thus a significant addition to system 100c over its counterpart system 100, system 100a, and system 100b. Such inclusion of pricing includes major challenges including rapidly changing inventory, exchange rates fluctuations, and competitive pressures, all of which can cause significant churn and waste of communication, processing and memory resources in system 100c, and accordingly such wastage can be reduced using the present teachings.

When establishing pricing, rapidly changing inventory creates a significant challenge. In the case of airlines, for example, the availability of seats for a given flight can change quickly. Thus, generating an offering on platforms 104 requires rapid queries and updates, and the price may drop or increase depending on the supply and demand for a given flight. This is but one example and rapid changes in other travel assets such as hotel rooms, car rentals also present inventory management challenges that are managed, at least in part, through rapidly changing pricing. When implementing system 100c, showing which assets are available on different platforms 104c involves correctly choosing and displaying a price for the user 124 that matches the market value while also ensuring that the content provider of the content engine 110c maintains sufficient margins to make the offering worthwhile. The problems with changing inventory apply to other travel assets and other industries as well.

When establishing pricing, exchange rates present another significant challenge. Today's ecommerce engines have means for doing a simple conversion from a currency in one jurisdiction in which the offering originates to the currency of another jurisdiction in which the customer (e.g. a user 124c) resides. However, this "one way" prior-art approach requires significant improvement to accommodate the sorts of transactions discussed in relation to system 100, system 100a and system 100b. Indeed, user 124c may hold many different types of currencies in their financial accounts 129c and thus transactions on system 100, system 100a and system 100b can benefit from more sophisticated currency handling. As will be discussed further below, the problem scales with digital currencies such as cryptocurrencies, "in-game" currencies and virtual currencies tied to a given platform 104c.

Thus, in system 100c, users 124c are also associated with financial accounts 129c. In Figure 25, the nomenclature for financial accounts 129c is of the format 129c-A-B, where "A" matches the number of the user 124c-A, and the "B" denotes the currency. Example currencies in Figure 25 include "BTC" for Bitcoin and "ETH" for Ethereum, and "USD" for US Dollar. These financial accounts 129c may be in the form of bank accounts, credit cards, virtual wallets or any type of financial account that can be used to electronically represent credit for a user 124c for transactions on platforms 104c. Financial accounts 129c are also tied to one or more platform accounts 128c.

A user 124c may, in addition to their local currency, hold national currencies in foreign jurisdictions such as US Dollars, Euros, Japanese Yen, Canadian Dollars, British Pounds and many others, as well as hold different digital currencies such as Bitcoin, Ethereum, Tether, BNB, USD Coin, XRP and many others. Furthermore, increasingly it is expected that users 124c may also hold virtual currencies in various in-game currencies such as V-Bucks from Fortnite^{™}, or Linden dollars from Second Life^{™}, or metaverse currencies such as Robux from Roblox^{™.} Virtual currencies may also extend to purchased in-game ad customized items that can be traded with other accounts 128c and/or exchanged to for virtual currencies. In-game and customization items can include outfits, skins, weapons, tools wall papers and the like, System 100c is also therefore scalable other metaverse platforms add their own currencies.

Thus, according to system 100c, any given user 124c may hold several different platform accounts 128c tied to various financial accounts 129c and due to such linkage, user 124c is able to conduct e-commerce transactions over system 100c involving offerings available from any content engine 110c on a given platform account 128c making payments via any tied financial account 129c.

For exemplary illustrative purposes, in Figure 25:
a. User 124c-1 is shown as having:
   i. Financial account 129c-1-BTC, in the Bitcoin denomination, tied to platform account 128c-1-1; and
   ii. Financial account 129c-1-ETH, in the Ethereum denomination, tied to platform account 128c-1-2.
b. User 124c-2 is shown as having:
   i. Financial account 129c-2-USD, in US Dollars denomination, tied to platform account 128c-2-1 and platform account 128c-2-3;
      and,
c. User 124c-3 is shown as having:
   i. Financial account 129c-3-BTC, in Bitcoin denomination, tied to platform account 128c-3-1 and platform account 128c-3-2;
   ii. Financial account 129c-3-EUR, in Euros denomination, tied to platform account 128c-3-2 and platform account 128c-3-3; and,
   iii. Financial account 129c-3-VBUCK, in V-Bucks denomination, tied to platform account 128c-3-3.

The term "financial account" is not to be construed in the abstract sense, but rather in the physical sense of an electronic database, or a plurality of an electronic data records, complete with authentication and encryption protocols. Such accounts can be hosted on, for example, servers by financial institutions (in the case of credit cards, bank accounts, "Paypal" accounts") or the platforms 104 themselves (in the case of virtual currencies such as V-bucks or Linden dollars or in-game items that can be exchanged for virtual currencies) or virtual wallets (in the case of digital or cryptocurrencies) or loyalty points (in the case of rewards programs such airline mile incentive programs).

System 100c also includes a currency exchange engine 113c. Currency exchange engine 113c is a comprehensive engine and is configured to make real-time conversions between any currency associated with financial account 129c. Currency exchange engine 113c can thus access, via network 106c, currency exchange rates from various servers hosted by financial institutions, central banks, foreign exchange trading platforms, digital currency exchanges, as well as a platform 104c that hosts its own virtual currency or virtual in-game currency. Currency exchange engine 113c can provide both "sell" and "buy" prices and can optionally be configured to hold electronic positions in different currencies. Currency exchange engine 113c is thus configured to manage currency exchanges between any of the currencies associated with financial accounts 129c.

Adaptation engine 119c is generally configured to interact with platforms 104c, content engines 110c and currency exchange engine 113c to generate offerings that can be purchased with credit on one or more financial accounts 129c via on client devices 120c, when those client devices 120c are engaged in sessions with platforms 104c via their respective accounts 128c on behalf of users 124c. Accordingly, in an advance over the prior art, adaptation engine 119c contributes to normalization of electronic traffic involving message content representing pricing across system 100c, as will be explained further in greater detail below.
A person of skill in the art will now begin to appreciate how integrating system 100b and method 1900b into system 100c can provide a unified account to further augment system 100c, such that financial accounts 129c belonging to the same user 124c may be used to conduct transactions on a platform account 128c that is not directly tied to that financial account 129c. To elaborate, a unified account from system 100b can be used to allow user 124c-3, for example, to conduct financial transactions on platform 128c-3 via platform account 128c-3-3 using financial account 129c-3-BTC, even though financial account 129c-3-BTC is not directly tied to platform account 128c-3-3. As another example, adaptation engine 119c can permit user 124c-3 to make payments on platform 128c-3-1 using V-BUCKS from financial account 129c-3-VBUCK, by way of a unified account for user 124c-3 generated according to system 100b, even though platform 128c-3 is not configured to directly handle pricing and payments in V-BUCKS.

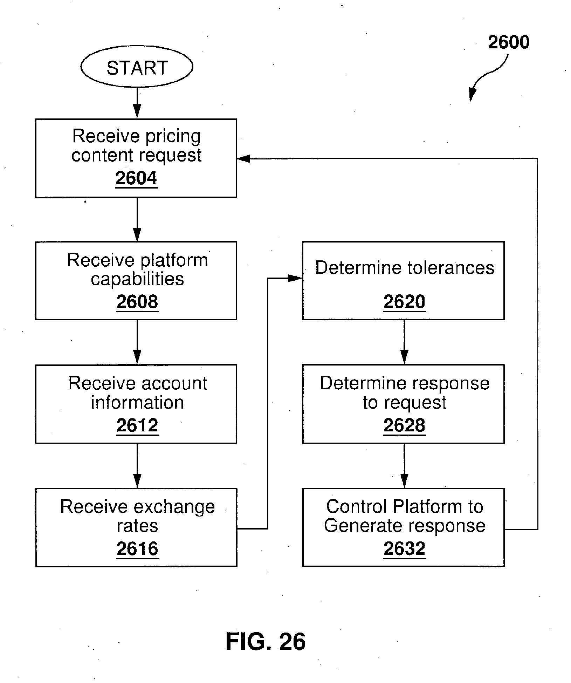

Figure 26 shows a flowchart depicting a method for normalization of electronic message content representing pricing across different platforms indicated generally at 2600. Method 2600 can be implemented on system 100c. Persons skilled in the art may choose to implement method 2600 on system 100c or variants thereon, (such as in combination with system 100 and/or system 100a and/or system 100c), or with certain blocks omitted, performed in parallel or in a different order than shown. Method 2600 can thus also be varied. However, for purposes of explanation, method 2600 will be described in relation to its performance on system 100c with a specific focus on adaption engine 119c and its interactions with the other nodes in system 100c.

Block 2604 comprises receiving a pricing request. In system 100c, the pricing request may be received at adaption engine 119c. A pricing request can arise in many different contexts of interactions between a given user 124c operating a given client device 120c to access a given platform 104c using the corresponding platform account 128c. For example, a pricing request may arise during an interaction such as that shown in Figure 6, where a client avatar 606 (representing a user 124) interacts with a travel agent avatar 608 during the review and potential selection of certain travel assets. As a specific example, in Figure 6 the pricing request of block 2604 may be for a specific flight on aircraft 612 and the associated cost of the pair of airline seats 628. As another specific example, the pricing request from block 2604 may arise in the context of Figure 11, for an advertisement to be displayed on the front of dynamic storefront object 1104-3. Again, these are specific examples, and a person of skill in the art will appreciate the range contexts that a pricing request from block 2604 may arise. The pricing request typically involves accessing listings of available inventory on the relevant content engines 110c or locally on the relevant platform 104c if the available inventory is already being tracked on that platform 104c. (Note that only a portion of the available inventory may be made available on one or more of the platforms 104c by the content engines 110c). The pricing request includes receiving an electronic message including available inventory along with a quote ("Q") for each item of inventor.

Block 2608 comprises determining platform capabilities. Generally analogous to the determination of platform criteria at block 1008 in method 1000, or block 408 of method 400. Block 2608 is performed by adaption engine 119c which, within the context of method 2600, ascertains the capability of the relevant platform 104c to display pricing information, which currencies are associated with the platform 104c, the types of those currencies (i.e. real world, digital currencies, virtual currencies), and any payment processing capabilities of the platform that are relevant to the pricing request from block 2604, such as virtual shopping carts, checkout functionality, order fulfillment tracking, refunds, returns, exchanges and the like.

Block 2612 comprises receiving account information. The account information is obtained from the platform account 128c of the user 124c that is being used to access the platform 104c from block 2608. Block 2612 also includes receiving the financial information associated with the financial account(s) 129c of the user 124c. Such financial information includes the currencies associated with the financial account(s) 129c and may also include the available credit balance associated with those financial accounts 129c. (A person of skill in the art will note how the use of a unified account from method 1900 can be applied to block 2612 if desired).

Block 2616 comprises receiving exchange rates. In system 100c, block 2616 is performed by adaptation engine 119c which access currency exchange engine 113c (or any other source of exchange rates on network 106c, including any rates on the relevant platform 104c) to obtain the relevant exchange rates. The relevant exchange rates include any source currency of the pricing for the good/service as generated by the relevant content engine 110c that is associated with the pricing request from block 2608. The relevant exchange rates also include any currency capabilities, criteria or restrictions of the platform 104c as determined at block 2608. The relevant exchange rates also typically include results from block 2612, such as the currency of the financial account(s) 129c associated with the platform account 128c that is being used to access the platform 104c from block 2608.

Block 2620 comprises determining tolerances. In system 100c, block 2616 is performed by adaptation engine 119c using the information from block 2604, block 2608, block 2612 and block 2616. In general, block 2620 includes programming instructions for establishing a price ("P") for the response to the pricing request at block 2608 that is, preferably, greater than the expenses ("E") to deliver the good or service associated with the pricing request. The value of price minus expenses can be referred to as margin ("M"), where *M*=*P-E.* Preferably, M is greater than a threshold value ("T"), and ideally T is greater than zero according to a desired return on investment. Note, amounts for block 2620 are normalized for the same currency.

System 100c includes several nodes that each have different expenses associated with delivering the good or service and expenses with fulfilling the transaction associated with the pricing request from block 2604. Accordingly, obtaining a margin greater than zero ("M>0") is not straightforward to determine and depends on many constantly shifting variables with system 100c.

As a first factor, the travel actor (or other retailer) associated with each content engine 110c will, on average, desire to ensure that the price ("P") is greater its own expenses. However, it may be additionally considered that the final price ("P") should be within an amount that is substantially the same as quotes for the same inventory as made available by other content engines 110c. In other words, the final price ("P") must be competitive within the overall marketplace. Accordingly, where competitive factors are considered, it can occur that a final price ("P") that may be less than expenses incurred by the operator of the content engine 110c. These are conditions that can be programmed into block 2620, by having adaptation engine 119c consider all available inventory from all content engines 110c, or these conditions can be determined locally at each content engine 110c.

As another factor, any currency exchanges between a currency available in a relevant financial account 129c and a final price "P" are accounted for at block 2620, to accommodate the spread between the "buy" and "sell" exchange rates. In some situations, a plurality of currency exchanges may be needed to go between currencies that lack any direct exchange rates. Thus tolerances are determined at block 2620 to cover expenses associated with such exchanges in currency. For example, assume user 124c-3 accessing platform 104c-2 via account 128c-3-2 wishes to acquire a good or service from platform 104c-2 that is quoted in Euros. Further, assume that user 124c-3 wishes to pay for the service V-Bucks from financial account 129c-3-VBUCK. Accordingly, then block 2620 can comprise determining the rate of exchange from converting V-Bucks in account 129c-3-VBUCKS at platform 104c-3 to Euros for deposit into financial account 129c-3-EUR for use on platform 104c-2.

In general, it will now be understood that the programming instructions at block 2620 can consider a variety of factors when determining profit margin tolerances.

Block 2628 comprises determining a response to the request from block 2604. Block 2628 makes the determination based on the data received at block 2604, block 2608, block 2612 and block 2616 taking into consideration the margin tolerance determined at block 2620. In system 100c, block 2628 configures adaption engine 119c order to implement a homogenous dynamic pricing solution over all distribution channels such as platforms 104c. The response determined at block 2628 seeks to preserve an overall revenue margin that considers all of the external events within system 100c, including currencies volatility; currencies nonlinearity (e.g. the exchange of in-game currency or loyalty program points for hard currency); market movements; market supply and demand; market competitors; and distribution channel variability.

Note that, at scale, system 100c can handle potentially millions of substantially simultaneous iterations of method 2600 as different users 124c accessing different platforms 104c engage in commercial activity in system 100c. The ability to provide a full control of the product value by dynamically adapting dynamically the price the in each distribution channel, is distributing products).

Block 2632 thus comprises controlling a platform to generate the response from block 2628. The nature of the controlling is not particularly limited. For example, in relation to the dynamic storefront object 1104-3, the result can be to display an advertisement to an avatar associated with a user 124c in a currency format that is consistent with the available currency in the financial account 129c that is associated with the account 128c used to access the relevant platform 104c. As another example, in relation to the sales experience in Figure 6, the result can be to display the final price P to avatar 606 as part of getting quotes for, booking tickets and paying for seats 628 on aircraft 612.

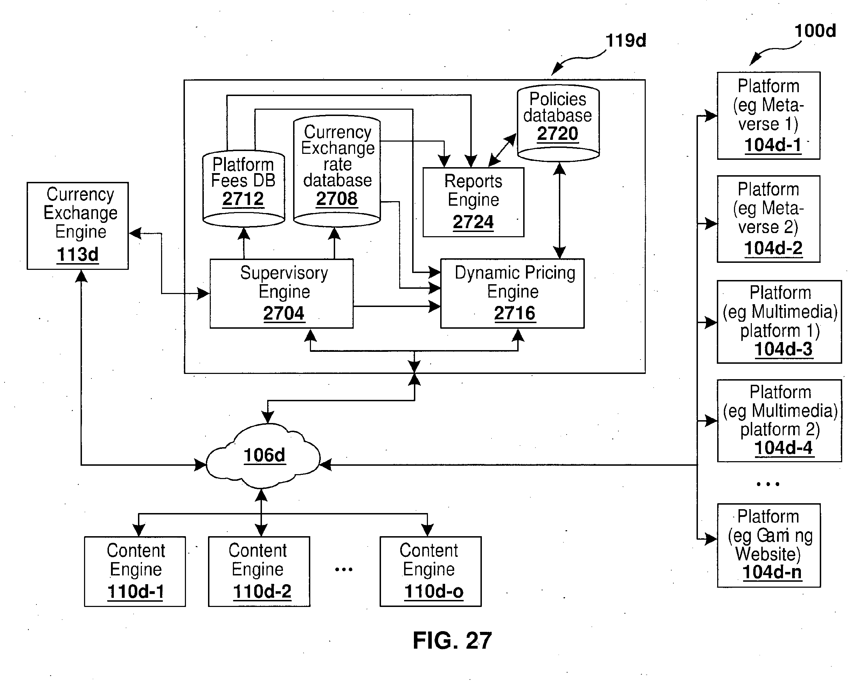

Referring now to Figure 27, in accordance with another embodiment, a system for normalization of electronic message content representing pricing across different platforms is indicated generally at 100d. System 100d is a variant on system 100c and thus like elements bear like references, except followed by the suffix "d". System 100d is virtually identical to system 100c except system 100d shows one non-limiting example of a block diagram that can be used to implement adaptation engine 119d. To create space to show adaptation engine 119d, client devices 120c, users 124c, accounts 128, and account 129 are not shown, but are implicitly present.

Engine 119d thus includes a supervisory engine 2704 which is configured to regularly poll, or received by realtime push, data from other nodes in system 100c and engine 119c. Supervisory engine 2704 thus receives currency exchange rates from currency exchange engine 113d or any other source of currency exchange rates that connects to network 106d. Those exchange rates are stored in currency exchange database 2708. This data is used at block 2616 of method 2600 when applied to system 104d.

Supervisory engine 2704 also receives service fees and related financial information from each platform 104d, such as commissions, selling fees, chargeback fees, return fees. Those service fees are stored in a platform fees database 2712. This data can be used at block 2608 of method 2600 when applied to system 104d.

Engine 119d also includes a dynamic pricing engine 2716 that allows retailers operating content engines 110d to implement dynamic pricing policies stored in a policies database 2720. Each retailer can define the policies, store them as software code in electronic format in its respective content engine110d which can then be periodically uploaded to policies database 2720. (In, variants, the policies can also be managed through any platform 104d that accommodates those policies.) These dynamic pricing policies can be executed by pricing engine 2716 to determine a desired margin M as part of determining a response per block 2628 as per the previous discussion in relation to method 2600. Such software code may for example implement the following policy: "If the exchange rate between Ethereum and the US Dollar is dropping by twenty percent, then increase my Expenses ("E") so that final pricing ("P") increases by twenty percent." Such policies can also include considerations regarding service fees stored in platform fees database 2712, such as "If platform 104d-2 increases its selling fee by five percent, then increase my Expenses ("E") by five percent for all inventory from my content engine 110d and limit my inventory to two hundred items." The former example thus balances the ability to continue presence on a given platform 104d-2 while also capping any drop in Margin ("M"). Again, these are non-limiting examples of policies which can be expressed in software code for storage in policies database 2720 for execution on dynamic pricing engine 2716.

The dynamic pricing engine 2716 can also be configured to control release of inventory. Such control may be desired, for example, when it is desired to keep pricing stable even though the pricing may result in a net financial loss. By capping the amount of inventory at a given price, the amount of loss can be capped. For example, a retailer operating a content engine 110d may want to keep the price of its products and services substantially stable during the promotion of a sale of virtual currencies in a metaverse platform 104d, (such as buy 1 and get 2) and can decide to drastically reduce its inventory during the promotion period or make it available only in the metaverse platform 104d where the price is stable. Further inventory will be released once the promotion ends. The objective of the retailer here is to keep a stable price as a marketing strategy instead of frequently changing it. The strategy will take into account the risk function and the currency evolution, it may happen that the value of the metaverse currency decrease after the end of a given promotion.

Adaptation engine 119d also includes a reports engine 2724 that includes its own storage device (not shown) and can provide historical data from fees database 2712, exchange rate database 2708, policies database 2720 and previous executions of method 2600 including historical pricing request from block 2604 and related responses from block 2628. These reports can be used to study prior states of system 100d that led to certain Margins ("M") and final pricing ("P"). Such reports can be used to fine tune policies stored in policies database 2720 to further optimize Margins ("M"). Machine learning approaches can also be applied to reports engine 2724 by setting target Margins ("M") and comparing actual Margins ("M") that were achieved for certain policies and policies failed to achieve those Margins ("M"). In this fashion, newer policies can be automatically generated and/or updated and/or prior policies can be automatically applied which were successful.

Further examples of pricing policies that can be stored in policies database 2720 will now occur to those skilled in the art. Different types of policies can include market strategy driven rules that optimize price, market-event responsive rules that respond to competitive pressures, currency event responsive rules that respond to currency fluctuations and others. Example policies that can based on different categories such as aggressive, "win-wiri", or market leader. An aggressive strategy may include always having a lower price than competitors, and/or increasing the price as inventory decreases, and/or a monetary policy that is stable regardless of exchange rates and/or fees across different platforms 104d. A win-win strategy can be based on pricing that is in middle of the competition prices and only changing the fees across different platforms 104d increase by a large threshold. A commercial leader strategy may focus on stable prices and infrequent price updates and/or tighter controls in inventories to preserve margins if the stable pricing erodes margin thresholds unacceptably.

In view of the above it will now be apparent that variants are contemplated.

One technical problem addressed herein is that there can be a high number of electronic messages sent rapidly between all nodes in system 100 when there is significant volatility in one or more currencies associated with one or more financial accounts 129, both in frequency and amplitude. Each message can be designed to reduced perceived risk associated with the volatility, yet each message consumes network and processing resources in system 100. Bitcoin changes value in seconds. It only takes a platform 104 or content engine 110c to offer a "two-for-one sale" on a given digital asset to drop the value of the asset by half. The sheer volume of electronic messages to manage these fluctuations all but render the use of an in-game item and other illiquid assets as technically overwhelming and impractical. Thus in certain embodiments, these sorts of messages are reduced by normalizing values of various currencies. The present specification navigates this variability by facilitating the financial transaction while being transparent with risk, but also insures against it, by having a two-tier transaction system.

For example: content engine 110c can offer a hotel room against a digital asset such as in-game item (e.g. a "skin") that cannot be exchanged for hard currency, but can be exchanged within the game with another user 124c using in-game currency. Embodiments herein can thus permit a user 124c to purchase, for example, a hotel room booking using an otherwise illiquid in-game item. A financial account 124c contains the digital asset (the in-game item) and connects to adaptation engine 119c. The adaptation engine 119c can then access the in-game currency from the financial account 124c and thereby offer a secondary market. A central wallet hosted by the adaptation engine 119c receives the "skin" of the digital asset from the financial account 124c and transfers the "skin" to a financial account held by the content engine 110c in exchange for the hotel room booking. Finally, the hotel room booking is transferred to a financial account 129c associated with the user 124c.

Since the value of an in-game item can fluctuate so wildly and have poor liquidity, the adaptation engine 119c can calculate the value of the digital asset at a point in time, or over a range of times, and notify the content engine 110c of the price and the risk. It is up to the operator of content engine 110c whether to accept that price and risk, knowing that they will need to resell the digital asset at some point in the future. However, any content engines 110c that do accept the price and the risk are contributing to the reduction of transaction messages that would otherwise result from attempts to manage the volatility risks.

System 110c can be modified to accommodate servers and platforms hosted by third parties. For example, a financial exchange server for in-game assets or any other currency within accounts 129c can physically intermediate between the adaptation engine 119c and content engine 110c and/or platform 104c. The financial exchange server can improve liquidity for digital assets stored in accounts 129c in exchange for traditional currency and/or transfer to a digital currency to the content engine 110c and/or as a bartering platform for illiquid currencies in financial accounts 129c and/or services offered by content engines 110c. Such a financial exchange server can calculate of prices and assign risks for all digital assets being put on the market.

By the same token, content engines 110c can present products or services on platforms 104c in any currency maintained in accounts 129c, by way of adaptation engine 119c determining the exchange and dynamically offering the products of services on platforms 104c according to actual available currencies in financial accounts 129c. Further controls can be added such that if there is significant volatility that an operator of a content engine 110c can specify limited availability of the product or service to reduce exchange rate risks. For example, assume that a given currency is fluctuating a lot and the retailers operating content engines 110c do not want to change prices frequently, in order to protect image, brand and/or profitability. The retailers operating content engines 110c can decide not to price products or services in the fluctuating currency even if it is the primary currency of the platform 104c where the product is exposed. Adaptation engine 119c can serve as a central wallet or a trusted third party can intermediate and be in charge of the currency conversion and taking its risk while the retailer will get revenue only in the currencies, used to sell products or services.

Another example application for the present specification is the ability to allow to any retailers operating content engines 110c to present products and services in different real or virtual currencies. If a given currency is fluctuating a lot and operators of content engines 110c do not want to change prices frequently to protect his image and brand, then system 100c provides a range of configurable options to provide liquidity for a disparate range of currencies while managing risk and reducing overall traffic burden on system 100c.

The retail operator of a content engine 110c can decide not to price product or services in the fluctuating currency even if it is the currency of the platform 104c where the product is exposed; insted a central wallet or a third party can be the intermediary who will manage currency conversion and assume volatility risk while the retail operator can derive revenue from only a desired set of currencies.

As another example variant, it can be noted that the foregoing has been discussed in relation to the travel industry, but it will now be understood that the above-described embodiments can be modified to other industries. For example, an online e-commerce environment such as Amazon^{™} that becomes enhanced through virtual reality metaverse offerings can be enhanced using the teachings herein. Example additional industries include vehicle purchases from dealerships, medical services from medical clinics, and real estate services from real estate agencies.

A person skilled in the art will now appreciate that the teachings herein can improve the technological efficiency and computational and communication resource utilization across system 100, system 100a, system 100b and system 100c and combinations of them. These efficiencies scale and become more desirable as the range of available hardware input and output devices for client devices expand and as metaverse and multimedia platform environments create additional contexts for the delivery of services such as travel agency services. The richness of experience combined with the convenience for users creates the opportunity for greater expectation management as to what travel services are being acquired. At the same time the sheer diversity of client devices and platforms creates a pull in the opposite direction, as there is a need to ensure that travel asset inventories (such as which airline seats, hotel rooms, restaurant booking times, have been sold and which remain open) are constantly updated in real time so that accurate inventory choices are being generated at the time a session for selection of such inventory is occurring between any given client machine and any given platform. Tracking of the same users across different devices and platforms leads to further system efficiencies. The filtering of unneeded content for less capable client machines also reduces network resource stress on the network, by only delivering the content that can be utilized by the given client device. Furthermore, individual retailers such as travel agencies can develop a consistent presence across several platforms using a single interface via a single adaptation engine, thereby reducing the multiplicity of efforts required for a single retail travel agency to build and update separate presences across several different platforms. The result is efficient use of computing resources, including processing, memory and communication resources, across system 100 and its variants, while providing as rich an experience as possible according to the resource capabilities of the client devices 120 and the platforms 104. Furthermore, by inferring or identifying common users across different platforms, those platforms can be controlled to, for example, generate content that is relevant to those users. In so doing, network communication resources on the network are used efficiently, by avoiding the generation of content that will not lead to further interactions from a user operating a given client device. Furthermore, by normalizing electronic messages representing pricing, the amount of churn across platforms is reduced, as the need for a user to switch from one platform to another platform based on available currency is reduced or obviated by providing an approach for handling the entire transaction on a single platform via a unified account and other teachings. A further advantage is that such normalization means that risk due to volatile currencies on one platform can be mitigated by offering currency from another platform on a platform where the currency is volatile.

In summary, the present specification provides a multiplatform virtual retail store engine. The specification can have application to client devices with augmented or virtual reality hardware that interact with different platforms with metaverse capabilities. Rich experiences are provided on client hardware while making efficient use of available processing, memory and communication resources. Embodiments discuss the provision of a single retail store model which is dynamically adapted for generation across the plurality of different platforms according to the different metaverse capabilities. Embodiments also discuss include ranking of the same user across different accounts on different metaverse platforms. Embodiments discuss the normalization of formatting and content electronic messages representing currencies and other instruments of exchange across different platforms.

It should be recognized that features and aspects of the various examples provided above can be combined into further examples that also fall within the scope of the present disclosure. In addition, the figures are not to scale and may have size and shape exaggerated for illustrative purposes.

## Claims

1. An adaptation engine for normalization of electronic message content representing across different virtual platforms comprising:
a network interface for communication over a network;
a processor configured to:
receive a request from a virtual platform for electronic content generated on the platform to a client device; the content representing a good or service;
receive capabilities of the platform for handling an electronic transaction representing a sale of the content;
receive account information for a user account operating the client device within an authenticated session between the client device and the platform;
receive exchange rates based on a first set of currencies unassociated with the user account and a second set of currencies associated with the account; and,
determine an amount, corresponding to the content, of at least one of the second set of currencies to transfer from the user account based on an exchange rate with one of the first set of currencies; and,
control the platform to generate a response fulfilling the request.

2. The adaptation engine of claim 1 wherein the first set of currencies and the second set of currencies include one or more of national currencies, cryptocurrencies, in-game currencies, and virtual currencies.

3. The adaptation engine of claim 1 or 2 wherein the content is hosted on one of a plurality of content engines respective to different retailers.

4. The adaptation engine of any of claims 1 to 3 wherein the margin is based on a policy that can emphasize inventory control.

5. The adaptation engine of any of claims 1 to 4 wherein the response is sent from the platform to the client device.

6. The adaptation engine of any of claims 1 to 5 wherein processor is further configured to control a second platform to generate the response based on the first amount when the user accesses the second platform during a second authenticated session with the second platform.

7. The adaptation engine of any of claims 1 to 6 wherein the account information is derived from a unified account that aggregates accounts for the same user for a plurality of platforms.

8. The adaptation engine of claim 7 wherein the amount is expressed in the selected currency from the second set of currencies and not available in the first set of currencies, and wherein adaptation engine is configured to normalize the messaging between the client device and the platform in the selected currency.

9. The adaptation engine of claim 7 or 8 wherein the processor is further configured to augment a checkout function on the platform based on the selected currency.

10. A method for normalization of electronic message content across different virtual platforms comprising:
receiving a request from a virtual platform for electronic content generated on the platform to a client device; the content representing a good or service;
receiving capabilities of the platform for handling an electronic transaction representing a sale of the content;
receiving account information for a user account operating the client device within an authenticated session between the client device and the platform;
receiving exchange rates based on a first set of currencies unassociated with the user account and a second set of currencies associated with the account; and,
determining an amount, corresponding to the content, of at least one of the second set of currencies to transfer from the user account to a platform account based on an exchange rate with one of the first set of currencies; and,
controlling the platform to generate a response fulfilling the request.

11. The method of claim 10 wherein the first set of currencies and the second set of currencies include one or more of national currencies, cryptocurrencies, in-game currencies, and virtual currencies.

12. The method of claim 10 or 11 wherein the content is hosted on one of a plurality of content engines respective to different retailers.

13. The method of any of claims 10 to 12 wherein the margin is based on a pricing policy that can emphasize one or more of pricing control or inventory control.

14. The method of any of claims 10 to 13 wherein the response is sent from the platform to the client device.

15. The method of any of claims 10 to 14 wherein processor is further configured to control a second platform to generate the response based on the first amount when the user accesses the second platform during a second authenticated session with the second platform.

16. The method of any of claims 10 to 15 wherein the account information is derived from a unified account that aggregates accounts for the same user for a plurality of platforms.

17. The method of claim 16 wherein the amount is expressed in the selected currency from the second set of currencies and not available in the first set of currencies, and wherein the adaptation engine is configured to normalize the messaging between the client device and the platform in the selected currency.

18. The method claim 16 or 17 wherein the processor is further configured to augment a checkout function on the platform based on the selected currency.
